# EUROPEAN PATENT APPLICATION

(11) **EP 4 258 731 A1**
(43) Date of publication of application: **11.10.2023**
(21) Application number: 20964682.7
(22) Date of filing: 10.12.2020
(51) Int. Cl.: H04W 24/04

(54) **DATA TRANSMISSION PROCESSING METHOD AND RELATED APPARATUS**

(71) Applicant: Huawei Technologies Co., Ltd., Longgang District Shenzhen, Guangdong 518129 (CN)
(72) Inventor: LOU, Chong, Shenzhen, Guangdong 518129 (CN); WANG, Rui, Shenzhen, Guangdong 518129 (CN); FAN, Qiang, Shenzhen, Guangdong 518129 (CN); XU, Xiaoying, Shenzhen, Guangdong 518129 (CN)
(74) Representative: Isarpatent
(86) International application number: PCT/CN2020/135365
(87) International publication number: WO 2022/120744

(57) **Abstract**

Embodiments of this application provide a data transmission processing method, including: determining that a target event occurs, where the target event includes at least one of the following: a connection failure event of a master cell group, a connection failure event of a secondary cell group, or a deactivation event of the secondary cell group; and controlling a target entity not to perform data transmission based on a first cell group corresponding to the target event, or suspending the target entity, where the target entity is a target packet data convergence protocol PDCP entity or a first radio link control RLC entity in the first cell group. According to embodiments of this application, a data transmission failure can be avoided.

## Description

### TECHNICAL FIELD

This application relates to the field of communication technologies, and in particular, to a data transmission processing method and a related apparatus.

### BACKGROUND

In a dual-connectivity structure, a terminal device may establish a physical path with two access network devices, and implement data transmission. The two access network devices may be a master node (master node, MN) and a secondary node (secondary node, SN). One or more cells provided by the MN for the terminal device may be referred to as a master cell group (master cell group, MCG), and one or more cells provided by the SN for the terminal device may be referred to as a secondary cell group (secondary cell group, SCG). The terminal device may perform communication by using the MCG and/or the SCG.

In an existing mechanism, when detecting that a connection failure occurs on a link between the terminal device and the SCG, the terminal device suspends a transmission link of the SCG, to avoid a failure of SCG-based communication. After the terminal device suspends the transmission link of the SCG, a packet data convergence protocol (packet data convergence protocol, PDCP) entity and a radio link control (radio link control, RLC) entity in the SCG still work normally. For uplink data, the PDCP entity normally processes to-be-sent data, and delivers a PDCP protocol data unit (protocol data unit, PDU) to the RLC entity in the SCG. The RLC entity in the SCG also normally processes the data, and waits for a media access control (media access control, MAC) layer to perform scheduling and sending.

However, because the transmission link of the SCG is suspended, processed data at an RLC layer of the SCG cannot be sent in time, and consequently data transmission fails. When detecting that a connection failure occurs on a link between the terminal device and the MCG, the terminal device suspends a transmission link of the MCG, and there is a technical problem that processed data at an RLC layer of the MCG fails to be transmitted. In addition, in the existing mechanism, a method for processing a deactivation event of the SCG is not defined. If reference is made to a method for processing a connection failure event on the link between the terminal device and the SCG, the transmission link of the SCG is suspended, and there is a technical problem that the processed data at the RLC layer of the SCG fails to be transmitted.

### SUMMARY

Embodiments of this application disclose a data transmission processing method and a related apparatus, to avoid a data transmission failure.

According to a first aspect, an embodiment of this application discloses a data transmission processing method, including: determining that a target event occurs, where the target event includes at least one of the following: a connection failure event of a master cell group, a connection failure event of a secondary cell group, or a deactivation event of the secondary cell group; and controlling a target entity not to perform data transmission based on a first cell group corresponding to the target event, or suspending the target entity. The target entity is a PDCP entity or an RLC entity in the first cell group. In other words, after determining that the target event occurs, a terminal device controls the target entity in the first cell group not to perform data transmission by using a transmission resource of the first cell group corresponding to the target event, or implements, by suspending the target entity, that the target entity does not perform data transmission by using the transmission resource of the first cell group corresponding to the target event. This avoids using the first cell group to communicate with an access network device corresponding to the first cell group, and avoids a data transmission failure.

In a possible example, the target entity is the target PDCP entity, and the method further includes: The terminal device controls the target PDCP entity to send data to a second RLC entity in a second cell group, where access network devices corresponding to the second cell group and the first cell group are different. In other words, when the target PDCP entity does not perform data transmission based on the first cell group, the data is sent based on the second RLC entity in the second cell group. This can avoid interruption of data transmission in the target PDCP entity, and improve data transmission efficiency.

In a possible example, the second RLC entity includes an RLC entity associated with a duplicate bearer of the target PDCP entity in the second cell group by the access network device, and that the terminal device controls the target PDCP entity to send data to a second RLC entity in a second cell group includes: In response to the second RLC entity being in an active state, the terminal device controls the target PDCP entity to send the data to the second RLC entity. It may be understood that when the second RLC entity is the RLC entity associated with the duplicate bearer of the target PDCP entity in the second cell group by the access network device and is in the active state, the data of the target PDCP entity may be transmitted based on the second RLC entity. This avoids the interruption of data transmission in the target PDCP entity, and improves data transmission efficiency. When the second RLC entity is in an inactive state, the terminal device first configures the second RLC entity to be in the active state, and then controls the target PDCP entity to send the data to the second RLC entity.

The second RLC entity includes an RLC entity associated with a split bearer of the target PDCP entity in the second cell group by the access network device. If an uplink data threshold is not considered, the terminal device may directly control the target PDCP entity to send the data to the second RLC entity. If the uplink data threshold is considered, in a possible example, that the terminal device controls the target PDCP entity to send data to a second RLC entity in a second cell group includes: In response to the second RLC entity being a primary RLC entity, the terminal device controls the target PDCP entity to send the data to the second RLC entity. It may be understood that when the second RLC entity is the RLC entity associated with the split bearer of the target PDCP entity in the second cell group by the access network device and is the primary RLC entity, the data of the target PDCP entity may be transmitted based on the second RLC entity. This avoids the interruption of data transmission in the target PDCP entity, and improves data transmission efficiency. When the second RLC entity is not the primary RLC entity, the terminal device first modifies the second RLC entity to the primary RLC entity, and then controls the target PDCP entity to send the data to the second RLC entity.

In a possible example, the target entity is the first RLC entity, and the method further includes: The terminal device discards an RLC SDU in the first RLC entity that has been partially sent. It may be understood that before the target event occurs, if a segment of the RLC SDU has been sent, the RLC SDU is also discarded. After the target event is resumed, the terminal device may reprocess the RLC SDU. This can avoid data loss.

In a possible example, the target entity is the first RLC entity, and the method further includes: The terminal device suspends the target PDCP entity. In other words, when it is determined that the target event occurs, the first RLC entity and the target PDCP entity are suspended. This can prevent the target PDCP entity from sending uplink data to the first RLC entity, prevent the first RLC entity from sending the uplink data, and further avoid the data transmission failure.

In a possible example, before that the terminal device controls the target entity not to perform data transmission based on the first cell group, or suspends the target entity, the method further includes: The terminal device sends first indication information to the target entity. The first indication information indicates that the target event occurs, or indicates the target entity not to perform an operation of data transmission based on the first cell group. In this way, the target entity may be directly controlled by the terminal device based on the first indication information. This improves processing efficiency of the target entity.

In a possible example, the method further includes: The terminal device suspends a transmission link of the first cell group. In other words, when it is determined that the target event occurs, the transmission link of the first cell group is suspended. This can prevent the target entity from sending uplink data to the first cell group, prevent the first cell group from receiving the uplink data, and further avoid the data transmission failure.

In a possible example, the method further includes: The terminal device sends second indication information to the access network device. The second indication information indicates that the target event occurs, a type of the target event, or a measurement result of the terminal device. In this way, the access network device may determine, by using the second indication information, that the target event occurs on the terminal device and related information about the target event. This helps the access network device process the target event, and improves processing efficiency.

According to a second aspect, an embodiment of this application discloses a data transmission processing method, including: A terminal device receives third indication information from an access network device; the terminal device determines, based on the third indication information, that a target event is resumed, where the target event includes at least one of the following: a connection failure event of a master cell group, a connection failure event of a secondary cell group, or a deactivation event of the secondary cell group; and the terminal device controls a target entity to perform data transmission based on a first cell group corresponding to the target event, or resumes the target entity. The target entity is a target PDCP entity or a first RLC entity in the first cell group. In other words, after receiving the third indication information, the terminal device may determine that the target event is resumed, so that the terminal device may directly control the target entity to perform data transmission by using a transmission resource of the first cell group corresponding to the target event, or implement, by resuming the target entity, that the target entity performs data transmission by using the transmission resource of the first cell group corresponding to the target event. This can avoid data loss.

In a possible example, the target entity is the target PDCP entity, and the method further includes: The terminal device reestablishes the first RLC entity. This can ensure that an RLC status of the terminal device is consistent with that of a serving cell of a new SCG, and increase a probability of successful data transmission.

In a possible example, the method further includes: The terminal device discards data stored in the first RLC entity. In this way, data received by the first RLC entity may be reprocessed. This can avoid repeated transmission.

In a possible example, the target entity is the target PDCP entity, and the method further includes: The terminal device reestablishes the target PDCP entity. This may enable the target PDCP entity to reconnect to the first RLC entity in the first cell group, ensure that the RLC status of the terminal device is consistent with that of the serving cell of the new SCG, and increase the probability of successful data transmission.

In a possible example, the method further includes: The terminal device retransmits unsent data of a PDCP entity. This can avoid data loss.

In a possible example, the method further includes: The terminal device controls the target PDCP entity to send data to a second RLC entity in a second cell group. Access network devices corresponding to the second cell group and the first cell group are different. It may be understood that the first RLC entity and the second RLC entity simultaneously transmit data for the target PDCP entity, so that data transmission efficiency can be improved.

In a possible example, the first RLC entity includes an RLC entity associated with a duplicate bearer of the target PDCP entity in the first cell group by the access network device, and that the terminal device controls a target entity to perform data transmission based on a first cell group includes: In response to the first RLC entity being in an active state, the terminal device controls the target PDCP entity to send the data to the first RLC entity. In other words, when the first RLC entity is the RLC entity associated with the duplicate bearer of the target PDCP entity in the first cell group by the access network device and is in the active state, the terminal device may control the target PDCP entity to send the data to the first RLC entity. When the first RLC entity is in an inactive state, the terminal device first configures the first RLC entity to be in the active state, and then controls the target PDCP entity to send the data to the first RLC entity.

The first RLC entity includes an RLC entity associated with a split bearer of the target PDCP entity in the first cell group by the access network device. If an uplink data threshold is not considered, the terminal device may directly control the target PDCP entity to send the data to the first RLC entity. If the uplink data threshold is considered, in a possible example, that the terminal device controls a target entity to perform data transmission based on a first cell group includes: In response to the first RLC entity being a primary RLC entity, the terminal device controls the target PDCP entity to send the data to the first RLC entity. In other words, when the first RLC entity is the RLC entity associated with the split bearer of the target PDCP entity in the first cell group device and is the primary RLC entity, the terminal device may control the target PDCP entity to send the data to the primary RLC entity (that is, the first RLC entity). When the first RLC entity is not the primary RLC entity, the terminal device first modifies the first RLC entity to the primary RLC entity, and then controls the target PDCP entity to send the data to the first RLC entity.

In a possible example, the target entity is the first RLC entity, and the method further includes: The terminal device reprocesses an RLC SDU stored in the first RLC entity. It may be understood that, after reestablishing the first RLC entity, the terminal device reprocesses data, that is, the RLC SDU, stored in the first RLC entity. This can avoid data loss.

In a possible example, before that the terminal device controls a target entity to perform data transmission based on a first cell group corresponding to the target event, or resumes the target entity, the method further includes: The terminal device sends fourth indication information to the target entity. The fourth indication information indicates that the target event is resumed, or indicates the target entity to perform an operation of data transmission based on the first cell group. In this way, the target entity may be directly controlled by the terminal device based on the fourth indication information. This improves processing efficiency of the target entity.

In a possible example, the method further includes: The terminal device resumes a transmission link of the first cell group. In this way, the transmission link of the first cell group may be resumed, to further avoid a data transmission failure caused when the target entity sends uplink data to the first cell group.

According to a third aspect, an embodiment of this application provides a data transmission processing apparatus, including a processing unit and/or a communication unit corresponding to the method according to any one of the foregoing aspects.

According to a fourth aspect, an embodiment of this application provides a data transmission processing apparatus, including a processor, a memory, and a communication interface. The processor is configured to store computer program code stored in the memory, to perform the method according to any one of the foregoing aspects.

According to a fifth aspect, this application provides a chip. The chip includes a processor, configured to invoke instructions from a memory and run the instructions stored in the memory, so that a terminal device in which the chip is installed performs the method according to any one of the foregoing aspects.

According to a sixth aspect, this application provides another chip. The chip may be a chip in a terminal device or an access network device. The chip includes an input interface, an output interface, and a processing circuit. The input interface, the output interface, and the circuit are connected through an internal connection path. The processing circuit is configured to perform the method according to any one of the foregoing aspects.

According to a seventh aspect, this application provides another chip. The chip includes an input interface, an output interface, and a processor. Optionally, the chip further includes a memory. The input interface, the output interface, the processor, and the memory are connected through an internal connection path. The processor is configured to execute code in the memory. When the code is executed, the processor is configured to perform the method according to any of the foregoing aspects.

According to an eighth aspect, this application provides a chip system. The chip system includes at least one processor, a memory, and an interface circuit. The memory, a transceiver, and the at least one processor are interconnected through a line. The at least one memory stores instructions. When the instructions are executed by the processor, the method according to any one of the foregoing aspects is implemented.

According to a ninth aspect, this application provides a computer-readable storage medium. The computer-readable storage medium stores instructions. When the instructions are run on a computer, the computer is enabled to perform the method according to any one of the foregoing aspects.

According to a tenth aspect, this application provides a computer program product. The computer program product is configured to store a computer program. When the computer program is run on a computer, the computer is enabled to perform the method according to anyone of the foregoing aspects.

According to an eleventh aspect, an embodiment of this application provides a communication system, including the terminal device and the access network device in any one of the foregoing aspects.

### BRIEF DESCRIPTION OF DRAWINGS

FIG. 1 is a schematic diagram of architectures of communication systems according to an embodiment of this application;
FIG. 2 is a schematic diagram of a user plane protocol stack according to an embodiment of this application;
FIG. 3 is a schematic diagram of an architecture in which an MN and an SN support a plurality of bearers according to an embodiment of this application;
FIG. 4 is a schematic flowchart of a processing method of an SCG connection failure event in a conventional technology according to an embodiment of this application;
FIG. 5 is a schematic flowchart of a processing method of an MCG connection failure event in the conventional technology according to an embodiment of this application;
FIG. 6 is a flowchart of a method of an SCG deactivation event or activation event in the conventional technology according to an embodiment of this application;
FIG. 7 is a schematic flowchart of a first data transmission processing method according to an embodiment of this application;
FIG. 8 is a schematic diagram of an architecture of an MCG and an SCG according to an embodiment of this application;
FIG. 9 is a schematic diagram of another architecture of an MCG and an SCG according to an embodiment of this application;
FIG. 10 is a schematic flowchart of a second data transmission processing method according to an embodiment of this application;
FIG. 11 is a schematic flowchart of a third data transmission processing method according to an embodiment of this application;
FIG. 12 is a schematic flowchart of a fourth data transmission processing method according to an embodiment of this application;
FIG. 13 is a schematic diagram of a structure of a data transmission processing apparatus according to an embodiment of this application; and
FIG. 14 is a schematic diagram of a structure of another data transmission processing apparatus according to an embodiment of this application.

### DESCRIPTION OF EMBODIMENTS

The following describes embodiments of this application with reference to the accompanying drawings in embodiments of this application.

Embodiments of this application may be applied to a communication system in which multiple radio access technologies (radio access technologies, RATs) dual connectivity (multiple RATs dual connectivity, MR-DC) is used and/or carrier aggregation (carrier aggregation, CA) is used. In addition, embodiments of this application may alternatively be applied to another communication system in which a same data packet may be sent through a plurality of transmission paths. This is not limited.

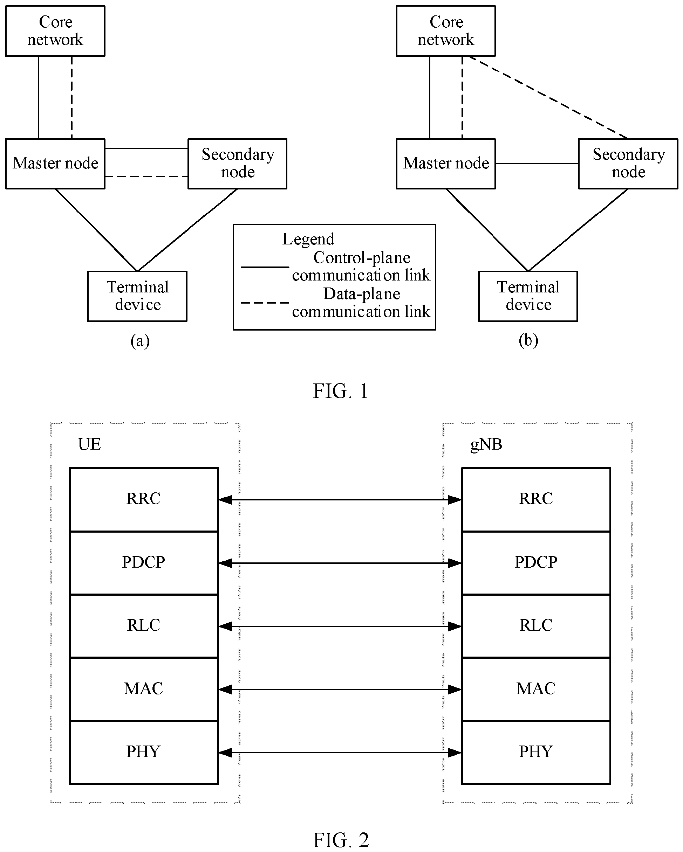

(a) in FIG. 1 and (b) in FIG. 1 are respectively diagrams of network architectures of communication systems in which the MR-DC is used. As shown in FIG. 1, an MR-DC communication system may include a core network, a master node (master node, MN), a secondary node (secondary node, SN), and a terminal device. In embodiments of this application, the MN may also be referred to as a master station, an anchor (anchor), a master network device, a master access network device, or the like. The SN may also be referred to as a secondary station, a secondary network device, a secondary access network device, or the like. Names of the MN and the SN are not limited in embodiments of this application.

It should be understood that the MN is a radio access network (radio access network, RAN) device, and provides terminations (terminations) of a user plane (user plane) protocol stack and a control plane (control plane) protocol stack of a wireless communication air interface for the terminal device. The SN is also a RAN device, and provides terminations of a user plane and a control plane of a wireless communication air interface for the terminal device. It should be noted that the MN and the SN may be RAN devices supporting different wireless communication technologies, or may be RAN devices supporting a same wireless communication technology. The Wireless communication technology may include but is not limited to: a global system for mobile communications (global system for mobile communications, GSM), a general packet radio service (general packet radio service, GPRS), a universal mobile telecommunications system (universal mobile telecommunications system, UMTS), code division multiple access (code division multiple access, CDMA), wideband code division multiple access (wideband code division multiple access, WCDMA), time-division code division multiple access (time-division code division multiple access, TD-SCDMA), evolved universal terrestrial radio access (evolved universal terrestrial radio access, E-UTRA), next radio (next radio, NR) communication, a wireless local area network (wireless local area network, WLAN), a future 5G (the fifth generation) wireless communication system, or the like.

In the communication system in which the MR-DC is used, the MN may communicate with the core network on a control plane and a data plane. The SN may communicate with the core network on the control plane by using the MN. Alternatively, the SN may communicate with the core network on the data plane by using the MN, as shown in (a) in FIG. 1, or the SN may communicate with the core network on the data plane without using the MN, as shown in (b) in FIG. 1.

It should be understood that the RAN device in embodiments of this application may also be referred to as an access network device, or the like. The RAN device may be referred to as an access network device below. For example, the access network device may be an access network device in a fifth-generation (5th-generation, 5G) mobile communication system, for example, a next generation NodeB (generation NodeB, gNB), may be an access network device in a long term evolution (Long Term Evolution, LTE) system, for example, an evolved NodeB (evolved NodeB, eNB), or may be a radio network controller (radio network controller, RNC), a NodeB (NodeB, NB), a base station controller (base station controller, BSC), a base transceiver station (base transceiver station, BTS), a home base station (for example, home evolved NodeB, or home NodeB, HNB), a baseband unit (baseband unit, BBU), a transmission reception point (transmission reception point, TRP), a transmitting point (transmitting point, TP), a mobile switching center, a wireless fidelity (wireless fidelity, Wi-Fi) access point (access point, AP), a radio controller in a cloud radio access network (cloud radio access network, CRAN) scenario, a relay station, an access point, an access network device in a future mobile communication system, or an access network device in a future evolved public land mobile network (public land mobile network, PLMN), or the like.

It should be understood that the terminal device in embodiments of this application is a device with a wireless transceiver function, and may be referred to as a terminal (terminal), user equipment (user equipment, UE), a mobile station (mobile station, MS), a mobile terminal (mobile terminal, MT), an access device, a vehicle-mounted device, an industrial control device, a UE unit, a UE station, a mobile station, a remote station, a remote device, a mobile device, a UE terminal, a wireless communication device, a UE agent, a UE apparatus, or the like. The terminal device may be fixed or movable. It should be noted that the terminal device may support at least one wireless communication technology, such as LTE, NR, or WCDMA. For example, the terminal device may be a mobile phone (mobile phone), a pad (pad), a desktop computer, a laptop computer, a palmtop computer, a mobile internet device (mobile internet device, MID), a wearable device, an all-in-one machine, a vehicle-mounted terminal, a virtual reality (virtual reality, VR) terminal device, an augmented reality (augmented reality, AR) terminal device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city, a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a terminal device in a future mobile communication network, a terminal device in a future evolved PLMN, or the like.

In embodiments of this application, a communication system in which a dual-connectivity architecture is used includes but is not limited to the following four types:
1. EN-DC (E-UTRA NR DC)

The EN-DC (E-UTRA NR DC) may also be referred to as an option 3 series (Option 3 series), in other words, the core network is an evolved packet core (evolved packet core, EPC), the MN is an access network device in long term evolution (long term evolution, LTE), and the SN is an access network device in NR. An example in which the access network device in LTE is an eNB (that is, the MN), and the access network device in NR is a gNB (that is, the SN) is used for description. There is an X2 interface between the eNB and the gNB, at least a control plane connection is included, and a user plane connection may be further included. There is an S1 interface between the eNB and the EPC, at least a control plane connection is included, and a user plane connection may be further included. There is an S1-U interface between the gNB and the EPC, that is, only a user plane connection can be included.

### 2. EN-DC (E-UTRA NR DC)

The NE-DC is also referred to as an option 4 series (Option 4 series), in other words, the core network is a 5G core (5G core, 5GC), the MN is an access network device in LTE, and the SN is an access network device in NR. An example in which the access network device in LTE is an eNB (that is, the MN), and the access network device in NR is a gNB (that is, the SN) is used for description. There is an Xn interface between the eNB and the gNB, at least a control plane connection is included, and a user plane connection may be further included. There is an NG interface between an eNB base station and the 5GC, at least a control plane connection is included, and a user plane connection may be further included. There is an NG-U interface between the gNB and the 5GC, that is, only a user plane connection can be included.

### 3. NG EN-DC (Next Generation E-UTRA NRDC)

The NG EN-DC is also referred to as an option 7 series (Option 7 series), in other words, the core network is a 5GC, the MN is an access network device in LTE, and the SN is an access network device in NR. An example in which the access network device in LTE is an eNB (that is, the SN), and the access network device in NR is a gNB (that is, the MN) is used for description. There is an Xn interface between the gNB and the eNB, at least a control plane connection is included, and a user plane connection may be further included. There is an NG interface between the gNB and the 5GC, at least a control plane connection is included, and a user plane connection may be further included. There is an NG-U interface between the eNB and the 5GC, that is, only a user plane connection can be included.

It should be understood that the EN-DC, the NE-DC, and the NG EN-DC are all dual connectivity between the access network device in LTE and the access network device in NR, and may be referred to as dual connectivity between LTE and NR for short.

### 4. NR-NR DC

The NR-NR DC may be understood as NR-to-NR dual connectivity, the core network is a 5GC, and both the MN and the SN are an access network device (for example, the gNB) in NR. An example in which the access network device in NR is a gNB is used for description. There is an Xn interface between a master gNB and a secondary gNB, at least a control plane connection is included, and a user plane connection may be further included. There is an NG interface between the master gNB and the 5GC, at least a control plane connection is included, and a user plane connection may be further included. There is an NG-U interface between the secondary gNB and the 5GC, that is, only a user plane connection can be included.

It should be understood that in a communication system in which the MR-DC or the NR-NR DC is used, the terminal device may simultaneously access at least one access network device. When the terminal device accesses an access network device, the access network device is an MN of the terminal device. When the terminal device accesses two or more access network devices, one of the two or more access network devices is the MN of the terminal device, and the other one or more access network devices are an SN/SNs of the terminal device.

An air interface resource in embodiments of this application may include one or more serving cells provided by the access network device (for example, the MN or the SN) for the terminal device. One or more cells provided by the MN for the terminal device may be referred to as a master cell group (master cell group, MCG), and one or more cells provided by the SN for the terminal device may be referred to as a secondary cell group (secondary cell group, SCG). For example, the access network device in LTE is an eNB, and the access network device in NR is a gNB. MCGs in the EN-DC, the NE-DC, the NG EN-DC, and the NR-NR DC are respectively the eNB, the eNB, the gNB, and the master gNB. SCGs are respectively the gNB, the gNB, the eNB, and the secondary gNB.

An NR wireless protocol stack is divided into two planes: a user plane (user plane, UP) and a control plane (control plane, CP). A control plane protocol stack is a protocol cluster used for control signaling transmission of a system, and a user plane protocol stack is a protocol cluster used for user data transmission. Compared with an LTE protocol stack, the user plane protocol stack in NR has one extra service data adaptation protocol (service data adaptation protocol, SDAP) layer. An example in which the terminal device is the UE and the access network device is the gNB is used for description. As shown in FIG. 2, a user plane protocol stack is in the following sequence from top to bottom: an SDAP layer, a packet data convergence protocol (packet data convergence protocol, PDCP) layer, a radio link control (radio link control, RLC) layer, a media access control (media access control, MAC) layer, a physical (physical, PHY) protocol layer.

The SDAP layer is configured by using radio resource control (radio resource control, RRC) signaling, and the SDAP layer is responsible for mapping a quality of service (quality of service, QoS) flow to a corresponding data radio bearer (data radio bearer, DRB). One or more QoS flows may be mapped to a same DRB, and one QoS flow can be mapped to only one DRB.

The PDCP layer is responsible for compressing and decompressing an internet protocol (internet protocol, IP) header, transmitting user data and maintaining a sequence number (sequence number, SN) (indicating a sending sequence of data packets) of a radio bearer, and processing an RRC message on the control plane and an IP packet on the user plane. On the user plane, after obtaining an IP data packet from an upper layer, a PDCP sublayer may perform header compression and encryption on the IP data packet, and then deliver the IP data packet to an RLC sublayer. The PDCP sublayer may further provide an in-order submission function and a duplicate packet detection function for the upper layer based on an SN of a PDCP data packet. A basic procedure in which a PDCP entity (entity) serves as a transmitting end includes the following six steps:
Step 1: Buffer a received PDCP service data unit (service data unit, SDU) in a PDCP transmission buffer (buffer), set a dedicated time-out timer (discard timer) for the PDCP SDU, and assign a sequence number to each data packet in a sequence the data packet arrives at the PDCP layer.

The PDCP SDU includes control plane data from an RRC layer or user plane data from the SDAP layer. The time-out timer is used to detect whether the PDCP SDU is successfully sent. When preset duration of the time-out timer expires, or when a status report (Status Report) indicating that the PDCP SDU is successfully received is received, it may be determined that the PDCP SDU has been sent, and the PDCP entity needs to discard the PDCP SDU and a corresponding PDCP PDU.

Step 2: The PDCP entity performs header compression processing on the user plane data.

Step 2 is optional, the PDCP entity performs header compression processing only on the user plane data, but does not perform header compression processing on the control plane data.

Step 3: The PDCP entity performs integrity protection on the control plane data or the user plane data based on an integrity protection algorithm.

The PDCP entity performs integrity protection on the control plane data or the user plane data, and may generate a verification code called MAC-I, so that a receiving end performs an integrity check. Integrity protection is always needed for the control plane data, and an integrity protection function for the user plane data is optional.

Step 4: The PDCP entity performs encryption on the control plane data or the user plane data.

Step 4 is optional. That the PDCP entity performs encryption on the control plane data or the user plane data may ensure security of data transmission between the transmitting end and the receiving end.

Step 5: Add a PDCP header and generate a PDCP PDU.

Step 6: Send the PDCP PDU to an RLC layer.

When switching from a connected state to a third state (that is, an inactive state, inactive), the terminal device performs a suspension operation on the PDCP entity. The PDCP entity serving as a transmitting end discards all stored PDCP PDUs, and sets a transmitting end variable (TX _NEXT) to an initial value, that is, 0. However, the PDCP entity serving as a transmitting end does not discard stored SDUs (referred to as suspended PDCP SDUs below). In this way, after the terminal device enters the connected state, these data packets can be provided with transmission opportunities, to avoid data packet loss in a state switching process.

The PDCP entity serving as a receiving end stops and resets a running reordering timer (t_Reordering). The reordering timer is used to detect whether the PDCP PDU is successfully received. If the PDCP PDU is not received within a time specified by the reordering timer, the receiving end considers that the PDCP PDU has been lost. During running of the reordering timer, the PDCP entity serving as a receiving end waits for an arrival of an out-of-order PDCP PDU. When the reordering timer expires, the PDCP entity does not wait for the out-of-order PDCP PDU, but delivers a received PDCP PDU to the upper layer (in other words, delivers the control plane data to the RRC layer, and delivers the user plane data to the SDAP layer) in ascending order of SNs.

It may be understood that when the terminal device performs the suspension operation on the PDCP entity, the PDCP entity no longer transmits data. The PDCP entity serving as a transmitting end discards all stored PDCP PDUs, stores suspended PDCP SDUs, and sets the transmitting end variable to the initial value. After the terminal device enters the connected state, the PDCP SDU may be reprocessed to generate a PDCP PDU, and data may be transmitted upward in a new sequence. This can avoid data packet loss in the state switching process. The PDCP entity serving as a receiving end stops and resets the running reordering timer, so that the data may be sequentially delivered to the upper layer in a previous order after the terminal device enters the connected state. In conclusion, after the terminal device enters the connected state, the PDCP entity transmits data that is not transmitted. This improves data transmission efficiency.

The access network device may configure whether a PDCP layer of a radio bearer (radio bearer, RB) of the terminal device needs to duplicate data of the PDCP entity, and send the duplicated data separately through two or more different paths (for example, two different RLC entities). Different RLC entities correspond to different logical channels. The RLC may communicate with the PDCP layer through a service access point (service access point, SAP), or may communicate with the MAC layer through a logical channel. Each logical channel of each terminal device has an RLC entity.

A PDCP data duplication function may be indicated to be started (that is, activated) or stopped (that is, deactivated) by using control signaling (control element, CE) of the MAC layer. When configuring a PDCP data duplication function of the RB, the access network device may configure whether the PDCP data duplication function is started immediately after configuration is completed. When the RLC entity is in an active state, the PDCP entity may send data to the RLC entity.

The access network device may configure a plurality of signaling radio bearers (signaling radio bearers, SRBs), for example, an SRB 1 and an SRB 2 configured on the MCG and an SRB 3 configured on the SCG, for the terminal device. A split bearer whose PDCP is terminated at an MN may also be referred to as an MN terminated split bearer, and may be referred to as an MN bearer for short. A split bearer whose PDCP is terminated at an SN may also be referred to as an SN terminated split bearer, and may be referred to as an SN bearer for short. There may be two bearer types of the PDCP data duplication function: a split bearer (split bearer) and a duplicate bearer (duplicate bearer). The split bearer may be understood as a radio bearer that may be associated with two or more transmission paths, that is, data on one split bearer may be transmitted through one or more of transmission paths associated with the split bearer.

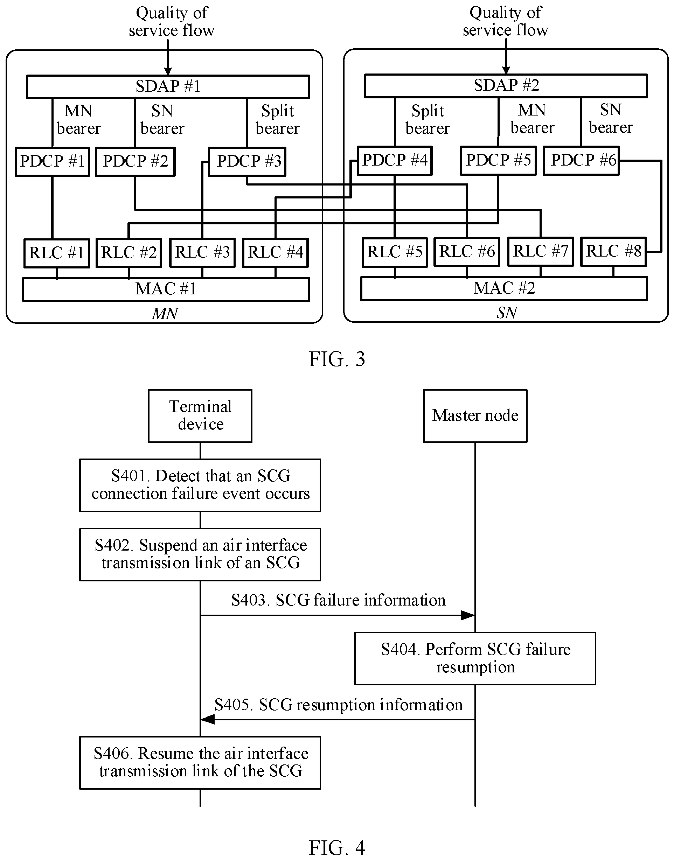

It should be noted that a maximum quantity of transmission paths that may be associated with one split bearer is related to a quantity of SNs accessed by the terminal device. In other words, in a multi-connectivity scenario, each of two or more transmission paths associated with a same split bearer is associated with air interface resources of different access network devices. For example, if the terminal device accesses one MN and one SN, when a split bearer is associated with a first transmission path and a second transmission path, the first transmission path may be associated with an air interface resource of the MN, and the second transmission path may be associated with an air interface resource of the SN. For example, as shown in FIG. 3, the terminal device may be connected to one MN and one SN, and a quantity of transmission paths associated with one split bearer is 2. For example, a PDCP #3 may transmit data through an RLC #3, or may transmit data through an RLC #6. The PDCP may split to-be-transmitted data into a plurality of pieces of sub-data, transmit partial sub-data through an MN RLC in the MCG, and transmit remaining sub-data through an SN RLC in the SCG.

For an uplink split bearer, one PDCP entity is associated with at least two RLC entities of the MCG and the SCG. Whether the terminal device delivers PDCP data to the RLC entity associated with the MCG or the RLC entity associated with the SCG depends on an uplink data threshold configured by the access network device. When a volume of to-be-sent data of the terminal device is greater than or equal to the uplink data threshold, the terminal device may determine to deliver the PDCP data to the RLC entity associated with the MCG or the RLC entity associated with the SCG. When the volume of to-be-sent data of the terminal device is less than the uplink data threshold, the terminal device can only deliver the PDCP data to a primary RLC entity. The primary RLC entity may be the RLC entity associated with the MCG, or may be the RLC entity associated with the SCG, and is indicated by the access network device. If a sub-data packet of a same service is separately transmitted through the primary RLC entity and a secondary RLC entity, a data transmission throughput is improved.

The duplicate bearer may be understood as that duplicated data (for example, an RRC message) may be transmitted on two or more transmission paths associated with one split bearer. This helps improve reliability of data transmission between the access network device and the terminal device.

In the NR user plane protocol stack, the RLC layer communicates with the PDCP layer (or the RRC layer) through an RLC channel (RLC channel), and communicates with the MAC layer through the logical channel. RLC configuration is logical channel-level configuration, and one RLC entity corresponds to only one logical channel of one terminal device. Data received by the RLC entity from the PDCP layer or data sent by the RLC entity to the PDCP layer is referred to as an RLC SDU (or the PDCP PDU). Data received by the RLC entity from the MAC layer or sent by the RLC entity to the MAC layer is referred to as an RLC PDU (or a MAC SDU).

The RLC layer includes a transmission mode (transparent mode, TM), an acknowledged mode (acknowledged mode, AM), and an unacknowledged mode (unacknowledged mode, UM). The RLC layer is mainly responsible for performing, in the acknowledged mode (acknowledged mode, AM) and the unacknowledged mode (unacknowledged mode, UM), segmentation/reassembly (segmentation/reassembly) on the RLC SDU, reassembly on the RLC SDU, and discarding and processing on reassembled RLC SDUs, and performing, in the AM mode, error correction by using an automatic repeat-request (automatic repeat-request, ARQ), duplicated packet detection (duplicate detection), re-segmentation (re-segmentation) on an RLC SDU segment, and protocol error detection. In addition, the RLC layer may be further used to transmit an upper-layer PDU and reestablish the RLC layer.

When the terminal device performs a suspension operation on the RLC entity, the RLC entity no longer transmits data. The RLC entity serving as a transmitting end discards all stored RLC PDUs, stores the suspended RLC SDU, and sets the transmitting end variable to the initial value. After the terminal device enters the connected state, the RLC SDU may be reprocessed to generate an RLC PDU, and data may be transmitted upward in a new sequence. This can avoid data packet loss in the state switching process. The RLC entity serving as a receiving end stops and resets the running reordering timer, so that the data may be sequentially delivered to the upper layer in a previous order after the terminal device enters the connected state. In conclusion, after the terminal device enters the connected state, the RLC entity transmits data that is not transmitted. This improves data transmission efficiency.

The MAC layer is mainly responsible for mapping, multiplexing, and demultiplexing between a logical channel and a transmission channel, reporting scheduling information, performing error correction by using a hybrid automatic repeat request (hybrid automatic repeat request, HARQ), managing priorities between users through dynamic scheduling, and managing priorities of logical channels.

As shown in FIG. 3, after a QoS flow of a user passes through the SDAP layer, the SDAP layer maps the QoS flow to a DRB, to determine a bearer corresponding to the QoS flow. The bearer may be one of an MCG bearer, an SCG bearer, or a split bearer. Then, the QoS flow is sent to the MN or the SN by using a corresponding PDCP entity, an RLC entity, and a MAC entity.

When embodiments of this application are described, some concepts used in the following descriptions are first explained and described.
(1) An MCG connection failure event and an SCG connection failure event occur.

To maintain reliability of a communication link between the terminal device and the access network device, the terminal device detects signal quality of each communication link. In a multi-connectivity mode, the terminal device detects whether a connection failure event occurs on a link between the terminal device and each access network device. For example, the terminal device detects whether a connection failure occurs on a link between the terminal device and the MCG, and whether a connection failure occurs on a link between the terminal device and the SCG. In embodiments of this application, that the terminal device detects that the connection failure occurs on the link between the terminal device and the MCG may be referred to as determining that the MCG connection failure event occurs, and that the terminal device detects that the connection failure occurs on the link between the terminal device and the SCG may be referred to as determining that the SCG connection failure event occurs. However, embodiments of this application are not limited thereto. The determining that the MCG connection failure event occurs may also be referred to as detecting that the MCG connection failure event occurs. The determining that the SCG connection failure event occurs may also be referred to as detecting that the SCG connection failure event occurs.

In embodiments of this application, the MCG connection failure event may include that a connection failure occurs on a link between the terminal device and a primary cell (primary cell, PCell) in the MCG or a special cell (Special Cell, SpCell) in the MCG, or include that a connection failure occurs on links between the terminal device and all cells in the MCG. In embodiments of this application, the SCG connection failure event may include that a connection failure occurs on a link between the terminal device and a secondary cell (secondary cell, SCell) in the SCG or a SpCell in the SCG, or include that a connection failure occurs on links between the terminal device and all cells in the SCG.

Generally, the MCG connection failure event or the SCG connection failure event includes at least one of the following: a radio link failure (radio link failure, RLF), a handover failure (handover failure, HOF), an integrity check failure (integrity check failure), an RRC reconfiguration failure, and the like. This is not limited in embodiments of this application.

The RLF includes the following four cases:
1. The terminal device detects that a quantity of consecutive out-of-sync (out-of-sync) indications is greater than a threshold, or no in-sync (in-sync) indication is received within preset duration.

The out-of-sync indication may be information reported when the terminal device detects that channel quality of a physical downlink control channel (physical downlink control channel, PDCCH) or a physical downlink shared channel (physical downlink shared channel, PDSCH) is lower than a threshold in a time window. The in-sync indication may be information reported when the terminal device detects a channel instruction of the PDCCH or the PDSCH is higher than a threshold in a time window. It may be understood that the out-of-sync indication may be understood as poor channel quality, and the in-sync indication may be understood as good channel quality. When the terminal device detects that the quantity of consecutive out-of-sync indications is greater than a threshold, or no in-sync indication is received within preset duration, it may indicate the radio link failure.

2. The terminal device detects that a random access problem occurs.

The random access problem occurs, for example, when a quantity of random access failures is greater than a threshold, and it may be considered that the RLF occurs on a current communication link.

3. The terminal device detects that a quantity of RLC retransmissions reaches the maximum.

The maximum quantity of RLC retransmissions is not limited in this application. When an RLC SDU is transmitted for a plurality of times but is still not successfully transmitted, it may be considered that the RLF occurs on the current communication link.

4. For an unlicensed spectrum, continuous listen-before-talk (listen-before-talk, LBT) failures are detected.

For example, if the terminal device fails to preempt a channel for a plurality of consecutive times, it may be considered that the RLF occurs on the current communication link.

A cause of the HOF includes but is not limited to one of the following: insufficient transmission resources, no configuration of a network path (IPPATH), a configuration error of a neighboring node in an IPPATH, and the like. If the terminal device cannot successfully access a target cell within specified duration after receiving a handover instruction, it may be considered that the HOF occurs.

The integrity check failure means that the terminal device fails to perform an integrity check on a data packet of an SRB or a DRB configured by the access network device. When the integrity check failure exists, it is considered that content of the data packet may be tampered with by an attacker. In this case, the current link is unreliable and the access network device needs to be notified.

The RRC reconfiguration failure means that when the access network device delivers an RRC reconfiguration message used to configure or reconfigure an MCG and/or an SCG, the terminal device cannot perform a configuration operation based on configuration information in the RRC reconfiguration message. The RRC reconfiguration message includes but is not limited to one of the following: at least one piece of configuration information does not match a capability of the terminal device, terminal identity information indicated by at least one piece of configuration information does not match the terminal device, and the like.

FIG. 4 is a schematic flowchart of a method of an SCG connection failure event in the conventional technology. As shown in FIG. 4, the method includes the following steps S401 to S406.

S401. A terminal device detects that an SCG connection failure event occurs.

S402. The terminal device suspends (suspends) a transmission link of an SCG.

The transmission link of the SCG suspended by the terminal device includes all SRBs and DRBs carried by the SCG. In this embodiment of this application, by resetting a MAC entity of the SCG, it can be ensured that the transmission link of the SCG is suspended. It may be understood that, when detecting that the SCG connection failure event occurs, the terminal device suspends the transmission link of the SCG. This can directly avoid using the SCG to communicate with an SN.

S403. The terminal device reports SCG failure information (SCG failure information) to a master node (MN).

The SCG failure information may be an RRC message, and may include a failure type of an occurred SCG connection failure event. For example, the failure type is: an RLF, a HOF, an integrity check failure, an RRC connection reconfiguration failure, or that consecutive out-of-sync indications are detected, no in-sync indication is received for a long time, a random access problem occurs, a quantity of RLC retransmissions reaches the maximum, or continuous LBT failures in the RLF. This is not limited herein.

Optionally, the SCG failure information may further carry a measurement result, to help the MN make a decision. The measurement result may be a measurement result of at least one frequency associated with the SCG, for example, a measurement result of a neighboring cell of a serving cell of the SCG at a given frequency.

S404. The master node performs SCG failure resumption.

The MN may resume a communication link between a UE and the SCG by releasing the transmission link of the SCG, triggering a handover process to change a primary cell of the SCG, or the like. It may be understood that, when the terminal device does not detect an MCG connection failure event, it may be determined that no connection failure occurs on an air interface link of an MCG. Therefore, the SCG failure resumption is performed by using an MN corresponding to the MCG, and a failure resumption success rate can be improved.

S405: The master node sends SCG resumption information to the terminal device.

The SCG resumption information indicates that the SCG connection failure event is resumed, indicates the terminal device to perform an SCell change, or the like. This is not limited herein. The SCG resumption information may be an RRC message, for example, an RRC reconfiguration message.

S406. The terminal device resumes (resumes) the transmission link of the SCG.

That the terminal device resumes the transmission link of the SCG includes resuming all SRBs and DRBs carried by the SCG.

Optionally, after step S406, the method further includes: Reestablish a PDCP entity if the terminal device changes a key of the SCG.

Optionally, after step S406, the method further includes: The terminal device reestablishes an RLC entity of the SCG.

When the terminal device reestablishes the RLC entity of the SCG, all RLC data is discarded. The data includes an RLC SDU, a segment of the RLC SDU, and an RLC PDU, so that an RLC status of the terminal device is consistent with that of a serving cell of a new SCG.

After the terminal device suspends the transmission link of the SCG, the PDCP entity and the RLC entity of the SCG still work normally. For uplink data, the PDCP entity normally processes to-be-sent data and delivers a PDCP PDU to the RLC entity of the SCG. The RLC entity of the SCG also normally processes data, and waits for a MAC layer for scheduling and sending. However, because SCG transmission is suspended, processed data at an RLC layer of the SCG cannot be sent in time. This causes a data transmission failure. In addition, when the RLC entity of the SCG is reestablished, the terminal device discards all RLC data. As a result, data that is started to be or has been processed at the RLC layer in an SCG failure resumption process is lost.

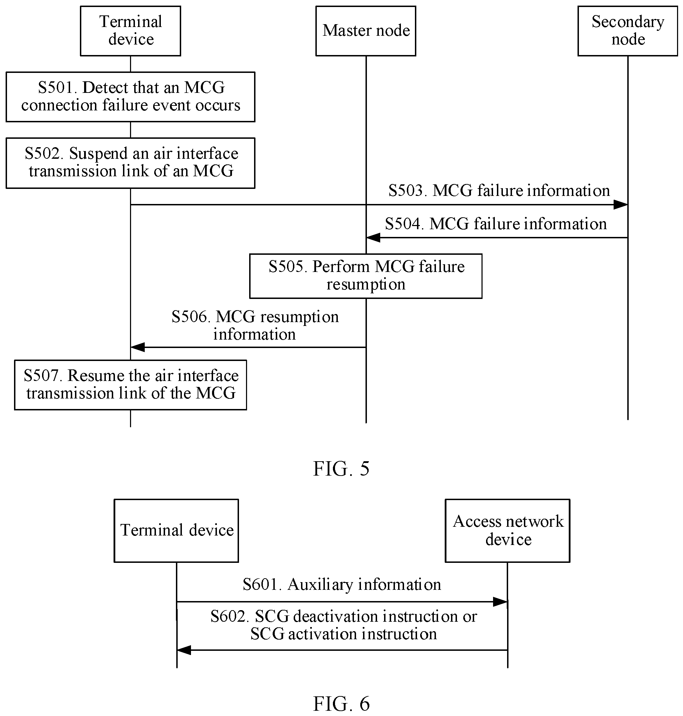

For a method for processing the MCG connection failure event, reference may also be made to the method for processing the SCG connection failure event. In addition, to avoid a 90-130 ms data interruption delay caused by processes such as cell reselection and access caused by triggering RRC reestablishment, and to avoid signaling overheads caused by RRC reconfiguration performed by an access network device on the MCG and the SCG of the terminal device because of RRC reestablishment, an MCG failure resumption mechanism is introduced in an NR protocol. Specifically, FIG. 5 is a schematic flowchart of a method of an MCG connection failure event in the conventional technology. As shown in FIG. 5, the method includes the following steps S501 to S507.

S501. A terminal device detects that an MCG connection failure event occurs.

S502. The terminal device suspends (suspends) a transmission link of an MCG.

The transmission link of the MCG suspended by the terminal device includes all SRBs and DRBs carried by the MCG. In this embodiment of this application, by setting a MAC entity of the MCG, it can be ensured that the transmission link of the MCG is suspended. It may be understood that, when detecting that the MCG connection failure event occurs, the terminal device suspends the transmission link of the MCG. This may directly avoid using the MCG to communicate with an MN.

S503. The terminal device sends MCG failure information (MCG failure information) to a secondary node (SN).

The MCG failure information may be reported by using a signaling radio bearer configured by the MN. The signaling radio bearer may be a dedicated signaling bearer for transmitting an RRC message between the terminal device and the SN, for example, an SRB3. The MCG failure information may be an RRC message, and may include a failure type of an occurred MCG connection failure event. For example, the failure type is: an RLF, a HOF, an integrity check failure, an RRC connection reconfiguration failure, or that consecutive out-of-sync indications are detected, no in-sync indication is received for a long time, a random access problem occurs, a quantity of RLC retransmissions reaches the maximum, or continuous LBT failures in the RLF. This is not limited herein. Optionally, the MCG failure information may further carry a measurement result, to help the MN make a decision. The measurement result may be a measurement result of at least one frequency associated with the MCG, for example, a measurement result of a neighboring cell of a serving cell of the MCG at a given frequency, and optionally, may carry a measurement result of at least one frequency associated with an SCG, for example, a measurement result of a neighboring cell of a serving cell of the SCG at a given frequency.

S504. The secondary node sends the MCG failure information to a master node (MN).

It may be understood as that the SN forwards the MCG failure information to the MN.

S505. The master node performs MCG failure resumption.

The MN may resume a communication link between the terminal device and the MCG by releasing the transmission link of the MCG, triggering a handover process to change a primary cell of the MCG, or the like.

S506. The master node sends MCG resumption information to the terminal device.

The MCG resumption information indicates that the MCG connection failure event is resumed, indicates the terminal device to perform a PCell change, or the like. This is not limited herein. The MCG resumption information may be an RRC message, for example, an RRC reconfiguration message.

S507. The terminal device resumes (resumes) the transmission link of the MCG.

That the terminal device resumes the transmission link of the MCG includes resuming all SRBs and DRBs carried by the MCG.

Optionally, after step S507, the method further includes: Reestablish a PDCP entity if the terminal device changes a key of the MCG.

Optionally, after step S507, the method further includes: The terminal device reestablishes an RLC entity of the MCG.

When the terminal device reestablishes the RLC entity of the MCG, all RLC data is discarded. The data includes an RLC SDU, a segment of the RLC SDU, and an RLC PDU, so that an RLC status of the terminal device is consistent with that of a serving cell of a new MCG.

It may be understood that after the terminal device suspends the transmission link of the MCG, the PDCP entity and the RLC entity in the MCG still work normally. For uplink data, the PDCP entity normally processes to-be-sent data and delivers a PDCP PDU to the RLC entity of the MCG. The RLC entity of the MCG also normally processes data, and waits for a MAC layer for scheduling and sending. However, because MCG transmission is suspended, processed data at an RLC layer of the MCG cannot be sent in time. This causes a data transmission failure. In addition, when the RLC entity of the MCG is reestablished, the terminal device discards all RLC data. As a result, data that is started to be or has been processed at the RLC layer in an MCG failure resumption process is lost.

(2) The MCG connection failure event and the SCG connection failure event are resumed.

After the MN performs SCG failure resumption on the SCG, the MN may send, to the terminal device, information (for example, the SCG resumption information described in step S405) indicating that the SCG connection failure event is resumed. After the MN performs MCG failure resumption on the MCG, the MN may send, to the terminal device, information (for example, the MCG resumption information described in step S506) indicating that the MCG connection failure event is resumed. In embodiments of this application, it may be determined, when the terminal device receives the information indicating that the SCG connection failure event is resumed, that the SCG connection failure event is resumed, and it may be determined, when the terminal device receives the information indicating that the MCG connection failure event is resumed, that the MCG connection failure event is resumed.

(3) An SCG deactivation event occurs and the SCG deactivation event is resumed.

In a dual-connectivity (or multi-connectivity) architecture, the access network device controls, based on a network condition or a requirement of the terminal device, the SCG to perform a deactivation operation. For example, when a data rate requirement of the terminal device changes (for example, the rate requirement changes from high to low), or considering power consumption of communication between the terminal device and the access network device, the access network device allows to perform the deactivation operation on the SCG. In other words, when the terminal device does not require a high data rate requirement, and/or power consumption of the terminal device needs to be further reduced, the access network device may deactivate a configured SCG, so that the terminal device temporarily disconnects a communication link with the SCG, and maintains data communication only by using the MCG. Once the data rate requirement of the terminal device changes from low to high, the access network device may reactivate the SCG that is already in a deactivated state, to resume the communication link between the terminal device and the SCG.

FIG. 6 is a flowchart of a method of an SCG deactivation event or activation event in the conventional technology. As shown in FIG. 6, the method includes steps S601 and S602.

S601. A terminal device sends auxiliary information to an access network device.

Step S601 is optional, and the auxiliary information may be used to assist the access network device (the following access network device in this application may be an MN, an SN, or the like, this is not limited herein) in determining whether the terminal device performs an SCG deactivation operation. A type of the auxiliary information may be at least one of an RRC message, a MAC message, a physical layer message, or the like. This is not limited herein. A form of the auxiliary information is not limited in this application, and the auxiliary information may include the following three forms.

The first form is a data buffer report which indicates a current volume of to-be-sent data of the terminal device. The volume of to-be-sent data may be a volume of to-be-sent data of at least one logical channel group configured by the access network device for the terminal device, or may be a volume of to-be-sent data of all logical channel groups configured by the access network device for the terminal device. The at least one logical channel group may be a logical channel group configured by the access network device. The volume of to-be-sent data of the logical channel group may be obtained by configuring by the access network device by using a buffer status report (buffer status report, BSR).

The second form is a status indication of a volume of to-be-sent data, which indicates a current status of the volume of to-be-sent data of the terminal device. For example, a high/medium/low indication reflects a status of a current volume of to-be-sent data.

The third form is a status indication of power consumption, which indicates a current power consumption status or an expected power consumption level of the terminal device. For example, the current power consumption of the terminal device is high, or a current power consumption level is expected to be reduced.

S602. The access network device sends a deactivation instruction or an activation instruction to the terminal device.

In this embodiment of this application, information indicating that an SCG is in a deactivated state may be referred to as an SCG deactivation instruction, and information indicating that the SCG is in an active state may be referred to as an SCG activation instruction. That is, after receiving the SCG deactivation instruction, the terminal device performs an operation of deactivation on the SCG. After receiving the SCG activation instruction, the terminal device performs an operation of activation on the SCG.

In addition, in this embodiment of this application, that the terminal device receives the SCG deactivation instruction sent by the access network device may be referred to as determining that an SCG deactivation event occurs, and that the terminal device receives the SCG activation instruction sent by the access network device may be referred to as determining that the SCG deactivation event is resumed.

It should be noted that the access network device that sends the SCG deactivation instruction and the SCG activation instruction to the terminal device may be the MN or the SN, and access network devices that send the SCG deactivation instruction and the SCG activation instruction may be the same or different. This is not limited herein. In FIG. 6, the access network device that receives the auxiliary information and the access network device that sends the SCG deactivation instruction or the SCG activation instruction are the same access network device, or may be different access network devices in an actual scenario.

Types of the SCG deactivation instruction and the SCG activation instruction may be at least one of an RRC message, a MAC message (for example, a MAC CE), or a physical layer message (for example, downlink control signaling (downlink control information, DCI)) or the like. This is not limited herein. The SCG deactivation instruction may include an SCG deactivation indication, for example, carrying a displayed information element to indicate the SCG to perform a deactivation operation. Optionally, the SCG deactivation indication may further carry at least one cell identifier or cell set identifier configured by the SCG, and indicates the at least one cell or cell set of the SCG to perform the deactivation operation or a hibernation operation. The SCG activation instruction may include an SCG activation indication, for example, carrying a displayed information element to indicate the SCG to perform an activation operation. Optionally, the SCG activation indication may further carry at least one cell identifier or cell set identifier configured by the SCG, and indicates the at least one cell or cell set of the SCG to perform the activation operation.

However, in an existing mechanism, a method for processing the SCG deactivation event and a method for processing resumption of the SCG deactivation event have not been defined. If reference is made to a method for processing an SCG connection failure event, a transmission link of the SCG is suspended. As a result, processed data at an RLC layer of the SCG cannot be sent in time. This causes a data transmission failure. If reference is made to a method for processing resumption of the SCG connection failure event, data that is started to be or has been processed at the RLC layer in an SCG failure resumption process is lost.

### (4) Target event

In embodiments of this application, the target event may be the SCG connection failure event, the MCG connection failure event, or the SCG deactivation event. Alternatively, the target event may be a connection failure event between an access network device and a terminal device in another multi-connectivity architecture, a deactivation event that occurs in a cell in a single access network device, or the like. This is not limited herein.

### (5) First cell group and second cell group

In embodiments of this application, the first cell group may be understood as a cell group that performs data transmission in the target event, or may be understood as a cell group that may be suspended. For example, a first cell group corresponding to the SCG connection failure event and the SCG deactivation event is an SCG, and a first cell group corresponding to the MCG connection failure event is an MCG. Access network devices corresponding to the second cell group and the first cell group are different, that is, the first cell group and the second cell group correspond to different access network devices. For example, when the first cell group is the SCG, the second cell group may be the MCG; and when the first cell group is the MCG, the second cell group may be the SCG.

### (6) Target PDCP entity

In embodiments of this application, the target PDCP entity may be all PDCP entities associated with the first cell group. For example, as shown in FIG. 3, when the first cell group is the MCG, the target PDCP entity may be at least one of a PDCP #1, a PDCP #2, or a PDCP #3. When the first cell group is the SCG, the target PDCP entity may be at least one of a PDCP #4, a PDCP #5, or a PDCP #6. Alternatively, the target PDCP entity may be a PDCP entity specified by the access network device (for example, the MN or the SN) in the first cell group by using signaling. Alternatively, the target PDCP entity may be a PDCP entity of a specified bearer type in the first cell group. For example, the target PDCP entity is a PDCP entity of a split bearer or a duplicate bearer, or has a same type as the target event. The target PDCP entity is not limited in this application. In addition, a quantity of the target PDCP entities is not limited. For example, as shown in FIG. 3, when the first cell group is the MCG, the target PDCP entity may be at least one of the PDCP #1 or the PDCP #3. When the first cell group is the SCG, the target PDCP entity may be at least one of the PDCP #4 or the PDCP #6.

### (7) First RLC entity and second RLC entity

In embodiments of this application, the first RLC entity may be all RLC entities associated with the first cell group. For example, as shown in FIG. 3, when the first cell group is the MCG, the first RLC entity may be at least one of the RLC #1, the RLC #2, the RLC #3, or the RLC #4. When the first cell group is the SCG, the first RLC entity may be at least one of the RLC #5, the RLC #6, an RLC #7, or an RLC #8. Alternatively, the first RLC entity may be an RLC entity specified by the access network device (for example, the MN or the SN) in the first cell group by using signaling, or an RLC entity corresponding to the SCG connection failure event or the MCG connection failure event. Alternatively, the first RLC entity may be an RLC entity of a specified bearer type in the first cell group. For example, the first RLC entity is an RLC entity associated with a split bearer or a duplicate bearer of the target PDCP entity in the first cell group, or has a same type as the target event. The first RLC entity is not limited in this application. In addition, a quantity of the first RLC entity entities is not limited. For example, as shown in FIG. 3, when the first cell group is the MCG, the first RLC entity may be at least one of the RLC #1 or the RLC #3. When the first cell group is the SCG, the first RLC entity may be at least one of the RLC #5 or the RLC #8.

In embodiments of this application, an RLC entity that is in the second cell group and that is configured to transmit data of the target PDCP entity may be referred to as the second RLC entity. The second RLC entity may include any RLC entity in the second cell group. For example, as shown in FIG. 3, when the first cell group is the MCG, the second RLC entity may be the RLC #5, the RLC #6, the RLC #7, or the RLC #8. When the first cell group is the SCG, the second RLC entity may be the RLC #1, the RLC #2, the RLC #3, or the RLC #4. The second RLC entity may be an RLC entity associated with a duplicate bearer of the target PDCP entity in the second cell group by the access network device (for example, the MN or the SN), or may include an RLC entity associated with a split bearer of the target PDCP entity in the second cell group by the access network device. As shown in FIG. 3, when the first cell group is the MCG, the second RLC entity may be the RLC #6. When the first cell group is the SCG, the second RLC entity may be the RLC #4. The second RLC entity may further include an RLC entity associated with a bearer corresponding to a target event in the second cell group by the access network device (for example, the MN or the SN). In other words, the second RLC entity is configured to carry data that is in the second cell group and that is different from data of an access network device corresponding to the first cell group. As shown in FIG. 3, when the target event is an SCG connection failure or the SCG deactivation event, the second RLC entity is an RLC entity associated with a bearer of the MCG, and the second RLC entity may be the RLC #1 or the RLC #3, and when the target event is an MCG connection failure, the second RLC entity is an RLC entity associated with a bearer of the SCG, and the second RLC entity may be the RLC #5 or the RLC #8.

When the second RLC entity is the RLC entity associated with a target PDCP entity of a duplicate bearer in the second cell group by the access network device, and is in an active state, the terminal device may control the target PDCP entity to send data to the RLC entity, and may separately transmit duplicated data by using the first RLC entity and the second RLC entity, to improve data transmission reliability.

When the second RLC entity is an RLC entity associated with a target PDCP entity of a split bearer in the second cell group by the access network device, the terminal device may directly control, without considering an uplink data threshold, the target PDCP entity to send data to the second RLC entity. In other words, when a to-be-sent data volume of the terminal device is greater than or equal to the uplink data threshold, or when a to-be-sent data volume of the terminal device is less than the uplink data threshold, the target PDCP entity is controlled to send data to a primary RLC entity. Alternatively, when the to-be-sent data volume of the terminal device is less than the uplink data threshold, the target PDCP entity may be controlled to send the data to the primary RLC entity. In other words, when the second RLC entity is the RLC entity associated with a target PDCP entity of a split bearer in the second cell group by the access network device, and the second RLC entity is the primary RLC entity, the terminal device may control the target PDCP entity to send the data to the second RLC entity. When the first RLC entity is an RLC entity associated with a split bearer in the first cell group by the access network device, and the first RLC entity is the primary RLC entity, the terminal device may control the target PDCP entity to send data to the first RLC entity. The primary RLC entity and the uplink data threshold are specified by the access network device. If a sub-data packet of a same service is separately transmitted through the first RLC entity and the second RLC entity, a data transmission throughput is improved.

### (8) Target entity

In this embodiment of this application, the target entity may be a target PDCP entity or a first RLC entity in the first cell group. A quantity of target entities is not limited in this application. The target entities may be a plurality of target PDCP entities or a plurality of first RLC entities, or may be a target PDCP entity and a first RLC entity.

### (9) First indication information

In this embodiment of this application, after determining that the target event occurs, the terminal device may send first indication information to the target entity. The first indication information indicates that the target event occurs, or indicates the target entity not to perform an operation of data transmission based on the first cell group, or indicates the target entity to perform an operation of data transmission based on the second cell group. That the target entity does not perform an operation of data transmission based on the first cell group is not limited in this application. When the target entity receives the data, the data may not be transmitted, or the target entity may be suspended, so that the target entity does not receive the data and send the data. That the target entity performs an operation of data transmission based on the second cell group is not limited in this application, and it may indicate that the target PDCP entity performs data transmission based on the second RLC entity. It may be understood that, after receiving the first indication information, the target entity may be directly controlled by the terminal device based on the first indication information. This improves processing efficiency of the target entity.

### (10) Second indication information

In this embodiment of this application, after determining that the target event occurs, the terminal device may send the second indication information to the access network device. The second indication information indicates that the target event occurs, a type of the target event, or a measurement result of the terminal device. The type of the target event may be one of the SCG connection failure event, the MCG connection failure event, or the SCG deactivation event, or may be a connection failure type in the SCG connection failure event or the MCG connection failure event (for example, the failure type is an RLF, a HOF, an integrity check failure, an RRC connection reconfiguration failure, or that consecutive out-of-sync indications are detected, no in-sync indication is received for a long time, a random access problem occurs, a quantity of RLC retransmissions reaches the maximum, or continuous LBT failures in the RLF), or may be a type of the SCG deactivation event (for example, a lower data rate requirement or a lower power requirement). This is not limited herein. For the measurement result, refer to the description of step S403 and step S503, and details are not described herein again. It may be understood that the access network device may determine, by using the second indication information, that the target event occurs on the terminal device and related information about the target event. This helps the access network device process the target event, and improves processing efficiency.

An access network device that receives the second indication information is not limited in this application. When the target event is the SCG connection failure event, a transmission failure occurs when the terminal device sends information to the SN. Therefore, the access network device may be the MN, to notify the SN to perform MCG failure resumption. When the target event is the MCG connection failure event, a transmission failure occurs when the terminal device sends information to the MN. Therefore, the access network device may be the SN, and forward the second indication information to the MN by using the SN, to notify the MN to perform the MCG failure resumption. When the target event is the SCG deactivation event, the access network device may be the MN or the SN.

### (11) Third indication information

In this embodiment of this application, after determining that the target event is resumed, the access network device may send third indication information to the terminal device. The third indication information indicates that the target event is resumed. An access network device that sends the third indication information is not limited in this application. When the target event is the SCG connection failure event or the MCG connection failure event, failure resumption is performed by an MN. Therefore, the access network device is the MN. When the target event is the SCG deactivation event, the access network device may be the MN or the SN. Optionally, an access network device that receives auxiliary information sent by the terminal device sends the third indication information to the terminal device. It may be understood that, after receiving the third indication information, the terminal device may determine that the target event is resumed, to control the target entity to perform data transmission by using a transmission resource of a first cell group corresponding to the target event. This can avoid data loss.

### (12) Fourth indication information

In this embodiment of this application, after determining that the target event is resumed, the terminal device may send fourth indication information to the target entity. The fourth indication information indicates that the target event is resumed, or indicates the target entity to perform the operation of data transmission based on the first cell group. The operation of data transmission performed by the target entity based on the first cell group is not limited in this application. Data transmission may be performed when the target entity receives the data, or the target entity may be resumed, so that the target entity receives the data and sends the data. The fourth indication information may also indicate the target entity to perform the operation of data transmission based on the second cell group. That the target entity performs an operation of data transmission based on the second cell group is not limited in this application, and it may indicate that the target PDCP entity performs data transmission based on the second RLC entity. It may be understood that, after receiving the fourth indication information, the target entity may be directly controlled by the terminal device based on the fourth indication information. This improves processing efficiency of the target entity. If the target entity can perform data transmission based on the first cell group and the second cell group, data transmission efficiency can be further improved.

This embodiment of this application provides a data transmission processing method. When determining that the target event occurs, the terminal device controls a target entity in the first cell group corresponding to the target event not to perform data transmission based on the first cell group. In other words, data transmission is not performed by using the transmission resource of the first cell group corresponding to the target event. This can prevent the first cell group from communicating with the access network device, to avoid a data transmission failure. In addition, when it is determined that the target event is resumed, the target entity is controlled to perform data transmission based on the first cell group. In other words, data transmission is performed by using a transmission resource corresponding to the target event. This can avoid data loss.

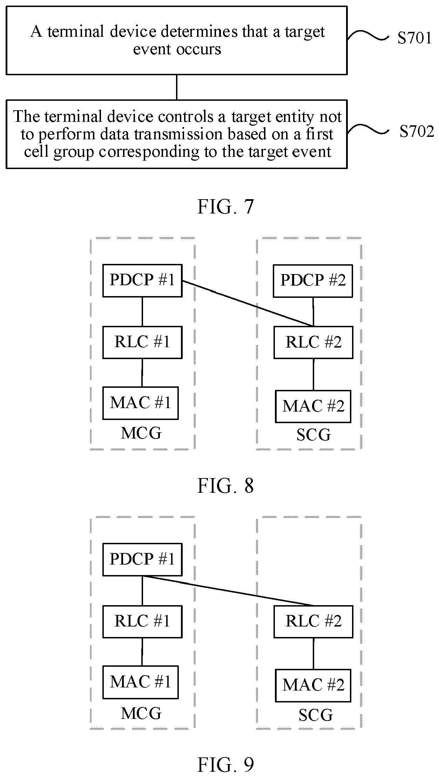

FIG. 7 is a schematic flowchart of a first data transmission processing method according to an embodiment of this application. As shown in FIG. 7, the method includes the following step S701 and step S702.

S701. A terminal device determines that a target event occurs.

The target event includes an SCG connection failure event, an MCG connection failure event, or an SCG deactivation event. Alternatively, the target event may be a connection failure event between an access network device and a terminal device in another multi-connectivity architecture, a deactivation event that occurs in a cell in a single access network device, or the like. When detecting an SCG connection failure or an MCG connection failure, the terminal device may determine that the SCG connection failure event or the MCG connection failure event occurs. When receiving a deactivation instruction sent by an access network device, the terminal device may determine that the SCG deactivation event occurs. For the target event and a method for determining that the target event occurs, refer to the foregoing descriptions. Details are not described herein again.

In a possible example, after step S701, the method further includes: The terminal device sends second indication information to the access network device.

The second indication information indicates that the target event occurs, a type of the target event, or a measurement result of the terminal device. For details, refer to the foregoing descriptions. Details are not described herein again. When the target event is the SCG connection failure event, an MN may resume a communication link between the terminal device and an SCG by releasing a transmission link of the SCG, triggering a handover process to change a primary cell of the SCG, or the like. When the target event is the MCG connection failure event, the MN may resume the communication link between the terminal device and the SCG by releasing a transmission link of the MCG, triggering a handover process to change a primary cell of the MCG, or the like.

S702. The terminal device controls a target entity not to perform data transmission based on a first cell group corresponding to the target event.

For the target entity and the first cell group corresponding to the target event, refer to the foregoing descriptions. Details are not described herein again. That the target entity does not perform data transmission based on the first cell group corresponding to the target event may be understood as that a target PDCP entity does not send uplink data to a first RLC entity, or the first RLC entity does not send uplink data to a MAC entity in the first cell group. In other words, data transmission is not performed by using a transmission resource of the first cell group corresponding to the target event. For example, as shown in FIG. 8, if the target event is the MCG connection failure event, a PDCP #1 does not send the uplink data to an RLC #1 in the MCG, or an RLC #1 does not send the uplink data to a MAC #1 in the MCG. If the target event is the SCG connection failure event or the SCG deactivation event, a PDCP #2 does not send the uplink data to an RLC #2 in the SCG, or an RLC #2 does not send the uplink data to a MAC #2 in the SCG.

It should be noted that, in addition to being controlled by the target PDCP entity to perform data transmission, a second RLC entity may further perform data transmission based on a source PDCP entity. For example, as shown in FIG. 8, when the second RLC entity is the RLC #2, the second RLC entity may transmit uplink data from the PDCP #1 and uplink data from the PDCP #2.

It may be understood that, in the method shown in FIG. 7, when determining that the target event occurs, the terminal device controls the target entity in the first cell group corresponding to the target event not to perform data transmission based on the first cell group. In other words, data transmission is not performed by using the transmission resource of the first cell group corresponding to the target event. This can prevent the first cell group from communicating with the access network device, to avoid a data transmission failure.

In a possible example, after step S702, the target entity is the target PDCP entity, and the method further includes: The terminal device controls the target PDCP entity to send data to the second RLC entity in a second cell group. Access network devices corresponding to the second cell group and the first cell group are different.

For the second cell group, refer to the foregoing descriptions. Details are not described herein again. The second RLC entity may include any RLC entity in the second cell group, and may specifically include an RLC entity associated with a bearer corresponding to the target event in the second cell group by the access network device (for example, the MN or an SN), may include an RLC entity associated with a target PDCP entity of a duplicate bearer in the second cell group by the access network device, or may include an RLC entity associated with a target PDCP entity of a split bearer in the second cell group by the access network device. In a possible example, the second RLC entity includes the RLC entity associated with the duplicate bearer of the target PDCP entity in the second cell group by the access network device. In response to the second RLC entity being in an active state, the terminal device controls the target PDCP entity to send data to the second RLC entity.

When the second RLC entity is in the active state, the terminal device may directly control the target PDCP entity to send the data to the second RLC entity. When the second RLC entity is in an inactive state, the terminal device first configures the second RLC entity to be in the active state, and then controls the target PDCP entity to send the data to the second RLC entity.

The second RLC entity includes the RLC entity associated with the split bearer of the target PDCP entity in the second cell group by the access network device. As described above, when a volume of to-be-sent data of the terminal device is greater than or equal to an uplink data threshold, the terminal device may determine to deliver PDCP data to an RLC entity associated with the MCG or an RLC entity associated with the SCG. It may be understood as that the terminal device may directly control, without considering the uplink data threshold, the target PDCP entity to send the data to the second RLC entity. When the volume of to-be-sent data of the terminal device is less than the uplink data threshold, the terminal device can only deliver the PDCP data to a primary RLC entity. In other words, when the uplink data threshold is considered, the terminal device sends data to the primary RLC entity. Based on this, in a possible example, in response to the second RLC entity being the primary RLC entity, the terminal device controls the target PDCP entity to send the data to the second RLC entity.

It may be understood that when the second RLC entity is the primary RLC entity, the terminal device may directly control the target PDCP entity to send the data to the second RLC entity. When the second RLC entity is not the primary RLC entity, the terminal device first modifies the second RLC entity to the primary RLC entity, and then controls the target PDCP entity to send the data to the second RLC entity.

In a possible example, the second RLC entity includes the RLC entity associated with the bearer corresponding to the target event in the second cell group by the access network device, and the terminal device controls the target PDCP entity to send the data to the second RLC entity.

When the second RLC entity includes the RLC entity associated with the bearer corresponding to the target event in a second cell by the access network device, the second RLC entity may alternatively transmit data corresponding to the target PDCP entity, and the terminal device may control the target PDCP entity to send the data to the second RLC entity.

For example, as shown in FIG. 9, when the MCG connection failure event occurs, the target PDCP entity is a PDCP #1, the first RLC entity is an RLC #1, and the second RLC entity is an RLC #2. In this case, the PDCP #1 may not transmit the uplink data based on the RLC #1, but transmit the uplink data based on the RLC #2.

By using the foregoing three examples, it may be implemented that the target PDCP entity sends data to the second RLC entity. Therefore, when the target PDCP entity does not send data to the first RLC entity, the target PDCP entity transmits data of the target PDCP entity based on the second RLC entity. This avoids interruption of data transmission in the target PDCP entity, and improves data transmission efficiency.

In a possible example, before step S702, the method further includes: The terminal device sends first indication information to the target entity.

The first indication information indicates that the target event occurs, indicates the target entity not to perform an operation of data transmission based on the first cell group, indicates the target entity to perform an operation of data transmission based on the second cell group, or the like. Refer to the foregoing descriptions, and this is not limited herein. It may be understood that, after receiving the first indication information, the target entity may be directly controlled by the terminal device based on the first indication information. This improves processing efficiency of the target entity.

In a possible example, after step S701, the method further includes: The terminal device suspends a transmission link of the first cell group.

In a possible example, after step S701, the method further includes: The terminal device suspends or deactivates a preconfigured authorization resource configured on the first cell group. The preconfigured authorization resource is a semi-persistent transmission resource configured by the access network device. The preconfigured authorization resource may take effect after the access network device configures the semi-persistent resource, or may take effect after the semi-persistent resource is activated by using a PDCCH. After suspending or deactivating the preconfigured authorization resource, the terminal device cannot perform data transmission with the access network device by using the preconfigured authorization resource, to avoid performing data transmission based on the first cell group.

It may be understood that, when it is determined that the target event occurs, the transmission link of the first cell group is suspended. This can prevent the target entity from sending uplink data to the first cell group, prevent the first cell group from receiving the uplink data, and further avoid a data transmission failure.

Optionally, the target event is the SCG deactivation event. After step S701, the method further includes: The terminal device stops or suspends monitoring a PDCCH on the SCG.

That the terminal device stops or suspends monitoring a PDCCH on the SCG includes but is not limited to an SCell or a primary secondary cell (primary secondary cell, PSCell). It may be understood that, after the SCG deactivation event occurs, channel quality of the SCG does not need to be attended to, so that the terminal device may stop or suspend monitoring the PDCCH on the SCG, to reduce power consumption.

Optionally, the target event is the SCG deactivation event. After step S701, the method further includes: The terminal device resets a MAC entity of the SCG.

That the terminal device resets a MAC entity of the SCG includes but is not limited to stopping all running timers at a MAC layer, stopping an ongoing random access process, clearing a buffer corresponding to a HARQ, and the like, so that the terminal device may be consistent with the access network device.

Optionally, the target event is the SCG deactivation event. After step S701, the method further includes: The terminal device continues to run a synchronous timer (time alignment timer, TAT) associated with the SCG.

The TAT is used by the terminal device to maintain uplink synchronization timing with the access network device. If the TAT expires, it is considered that the terminal device is out of uplink synchronization with the access network device. Therefore, the terminal device may continue to maintain uplink synchronization, without being affected by an SCG failure.

Optionally, the target event is the SCG deactivation event. After step S701, the method further includes: The terminal device deactivates one or more cells on the SCG.

That the terminal device deactivates one or more cells on the SCG may be deactivating all secondary cells on the SCG, or deactivating all cells on the SCG, including a primary cell and a secondary cell. After deactivating the one or more cells, the terminal device cannot receive or transmit data in the cell, so that the terminal device may stop monitoring a PDCCH on the cell, to reduce power consumption.

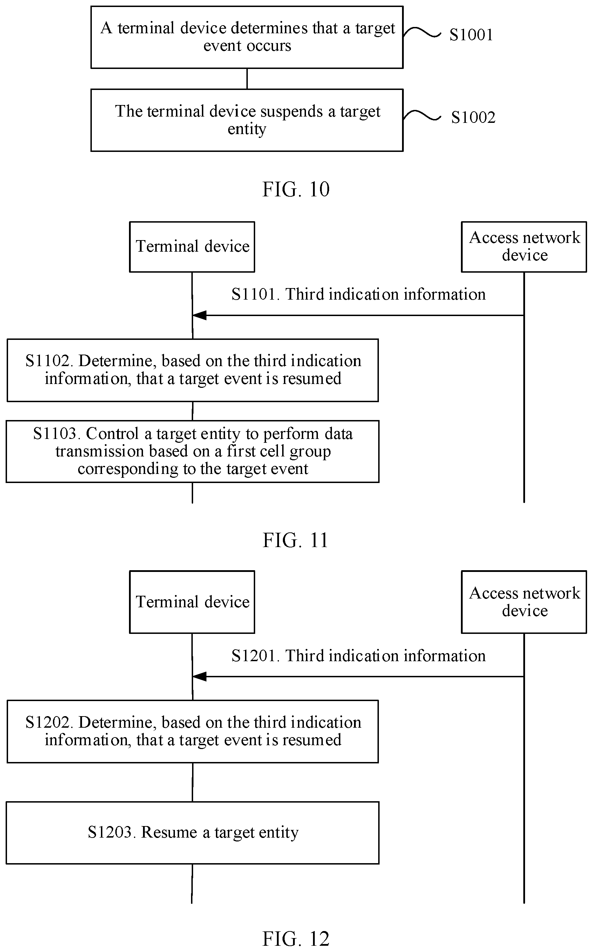

FIG. 10 is a schematic flowchart of a second data transmission processing method according to an embodiment of this application. As shown in FIG. 10, the method includes the following step S1001 and step S1002.

S1001. A terminal device determines that a target event occurs.

For step S1001, refer to the descriptions of step S701, and details are not described herein again.

S1002. The terminal device suspends a target entity.

A step of suspending the target entity is not limited in this application. After the target entity is suspended, the target entity does not transmit data.

It may be understood that, when it is determined that the target event occurs, if a target PDCP entity is suspended, the target PDCP entity can be prevented from sending data to a first RLC entity. If the first RLC entity is suspended, the first RLC entity can be prevented from sending data to a MAC entity in a first cell group. In this way, the target entity can be prevented from transmitting uplink data. This avoids performing communication, by using the first cell group, with an access network device corresponding to the first cell group, and avoids a data sending failure.

For example, as shown in FIG. 8, when an MCG connection failure event occurs, a PDCP #1 or an RLC #1 may be suspended. This can avoid transmitting uplink data to the RLC #1 by using the PDCP #1, or avoid transmitting the uplink data to a MAC #1 by using the RLC #1.

In a possible example, the target entity is the first RLC entity, and the method may further include: The terminal device suspends the target PDCP entity. In other words, when it is determined that the target event occurs, the first RLC entity and the target PDCP entity are suspended. This can prevent the target PDCP entity from sending the uplink data to the first RLC entity, prevent the first RLC entity from sending the uplink data, and further avoid a data transmission failure.

In a possible example, the target entity is the target PDCP entity, and the method may further include: The terminal device suspends the first RLC entity. In other words, when it is determined that the target event occurs, the target PDCP entity and the first RLC entity are suspended. This can prevent the target PDCP entity from sending the uplink data to the first RLC entity, prevent the first RLC entity from sending the uplink data, and further avoid a data transmission failure.

For example, as shown in FIG. 8, when the MCG connection failure event occurs, the PDCP #1 and the RLC #1 may be suspended. This can avoid transmitting the uplink data to the RLC #1 by using the PDCP #1, and avoid transmitting the uplink data to the MAC #1 by using the RLC #1.

In the method shown in FIG. 10, when determining that the target event occurs, the terminal device suspends the target entity. Therefore, by suspending the target entity, the target entity does not perform data transmission based on the first cell group. In other words, data transmission is not performed by using a transmission resource of the first cell group corresponding to the target event. This can prevent the first cell group from communicating with the access network device, to avoid the data transmission failure.

In a possible example, if the target entity is the first RLC entity, the method may further include: The terminal device discards an RLC SDU in the first RLC entity that has been partially sent.

The RLC SDU that has been partially sent is a segment of an RLC SDU that is sent by an RLC before the target event occurs. For example, an RLC SDU #1 includes two segments: an RLC SDU segment #1 and an RLC SDU segment #2. If the RLC SDU segment #1 is sent before the target event occurs, both the RLC SDU segment #1 and the RLC SDU #2 are discarded. It may be understood that before the target event occurs, if a segment of the RLC SDU has been sent, the RLC SDU is also discarded. After the target event is resumed, the terminal device may reprocess the RLC SDU. This can avoid data loss.

In a possible example, the target entity is the first RLC entity, and the method may further include: The terminal device discards all stored RLC PDUs, but does not discard the RLC SDU. It may be understood that the terminal device discards a data packet that has been processed at an RLC layer, that is, an RLC PDU. However, the terminal device stores original data received at the RLC layer, that is, an RLC SDU. The RLC SDU may be referred to as a suspended RLC SDU. Therefore, after the target event is resumed, the terminal device may reprocess the RLC SDU, to avoid discarding data.

In a possible example, the target entity is the first RLC entity, and the method may further include: The terminal device stops and resets a running timer (including a reassembly timer (t-Reassembly) at the RLC layer, configured to wait for at least one segment of an unreceived complete RLC SDU or a complete RLC SDU) at the RLC layer. In this way, an RLC status of the terminal device is consistent with that of a serving cell of the access network device. This can increase a probability of successful data transmission. In addition, after the target event is resumed, the terminal device may continue to run the timer of the RLC layer.

In a possible example, the target entity is the first RLC entity, and the method may further include: The terminal device sets a status variable of the RLC layer to an initial value. In this way, the RLC status of the terminal device is consistent with that of the serving cell of the access network device.

In a possible example, the target entity is the target PDCP entity, and the method further includes: The terminal device discards all PDCP PDUs stored in the target PDCP entity, and stores a suspended PDCP SDU. In this way, after the target event is resumed, the terminal device may reprocess the PDCP SDU, to avoid discarding data.

In a possible example, the target entity is the target PDCP entity, and the method may further include: The terminal device stops and resets a running timer (including a reassembly timer (t-Reassembly) at a PDCP layer) at the PDCP layer. In this way, a PDCP status of the terminal device is consistent with that of a serving cell of the access network device. This can increase a probability of successful data transmission. In addition, after the target event is resumed, the terminal device may continue to run a reordering timer.

In a possible example, the target entity is the target PDCP entity. Refer to the foregoing descriptions. The method may further include: The terminal device sets a status variable of the PDCP layer to an initial value. In this way, the PDCP status of the terminal device is consistent with that of the serving cell of the access network device.

In a possible example, before step S1002, the method further includes: The terminal device sends first indication information to the target entity. It may be understood that, after receiving the first indication information, the target entity may be directly controlled by the terminal device based on the first indication information. This improves processing efficiency of the target entity.

In a possible example, after step S1001, the method further includes: The terminal device suspends a transmission link of the first cell group. It may be understood that, when it is determined that the target event occurs, the transmission link of the first cell group is suspended. This can prevent the target entity from sending uplink data to the first cell group, prevent the first cell group from receiving the uplink data, and further avoid a data transmission failure.

In a possible example, after step S1001, the method further includes: The terminal device suspends or deactivates a preconfigured authorization resource configured on the first cell group. The preconfigured authorization resource is a semi-persistent transmission resource configured by the access network device. The preconfigured authorization resource may take effect after the access network device configures the semi-persistent resource, or may take effect after the semi-persistent resource is activated by using a PDCCH. After suspending or deactivating the preconfigured authorization resource, the terminal device cannot perform data transmission with the access network device by using the preconfigured authorization resource, to avoid performing data transmission based on the first cell group.

Optionally, the target event is an SCG deactivation event. After step S1001, the method further includes: The terminal device stops or suspends monitoring a PDCCH on an SCG. It may be understood that, after the SCG deactivation event occurs, channel quality of the SCG does not need to be attended to, so that the terminal device may stop or suspend monitoring the PDCCH on the SCG, to reduce power consumption.

Optionally, the target event is the SCG deactivation event. After step S1001, the method further includes: The terminal device resets a MAC entity of the SCG.

That the terminal device resets a MAC entity of the SCG includes but is not limited to stopping all running timers at a MAC layer, stopping an ongoing random access process, clearing a buffer corresponding to a HARQ, and the like, so that the terminal device may be consistent with the access network device.

Optionally, the target event is the SCG deactivation event. After step S1001, the method further includes: The terminal device continues to run a synchronous timer (time alignment timer, TAT) associated with the SCG.

The TAT is used by the terminal device to maintain uplink synchronization timing with the access network device. If the TAT expires, it is considered that the terminal device is out of uplink synchronization with the access network device. Therefore, the terminal device may continue to maintain uplink synchronization, without being affected by an SCG failure.

Optionally, the target event is the SCG deactivation event. After step S1001, the method further includes: The terminal device deactivates one or more cells on the SCG.

That the terminal device deactivates one or more cells on the SCG may be deactivating all secondary cells on the SCG, or deactivating all cells on the SCG, including a primary cell and a secondary cell. After deactivating the one or more cells, the terminal device cannot receive or transmit data in the cell, so that the terminal device may stop monitoring a PDCCH on the cell, to reduce power consumption.

FIG. 11 is a schematic flowchart of a third data transmission processing method according to an embodiment of this application. As shown in FIG. 11, the method includes the following steps S1101 to S1103.

S1101. An access network device sends third indication information to a terminal device.

That an access network device sends third indication information to a terminal device may be understood as that the terminal device receives the third indication information from the access network device. In this embodiment of this application, the third indication information indicates that a target event is resumed. When the target event is an SCG connection failure event or an MCG connection failure event, the access network device in step S801 is an MN. In other words, the third indication information may be the SCG resumption information sent by the MN to the terminal device in step S405, or may be the MCG resumption information sent by the MN to the terminal device in step S506. When the target event is an SCG deactivation event, the access network device in step S801 may be an MN or an SN, that is, the third indication information may be an SCG activation instruction sent by the MN or the SN to the terminal device. For the target event and the third indication information, refer to the foregoing descriptions. Details are not described herein again.

S1102. The terminal device determines, based on the third indication information, that the target event is resumed.

S1103. The terminal device controls a target entity to perform data transmission based on a first cell group corresponding to the target event.

For the target entity and the first cell group corresponding to the target event, refer to the foregoing descriptions. Details are not described herein again. That the target entity performs data transmission based on the first cell group corresponding to the target event may be understood as that a target PDCP entity sends uplink data to a first RLC entity, or a first RLC entity sends uplink data to a MAC entity in the first cell group. In other words, data transmission is performed by using a transmission resource of the first cell group corresponding to the target event. For example, as shown in FIG. 8, if the target event is the MCG connection failure event, a PDCP #1 sends uplink data to an RLC #1 in an MCG, or an RLC #1 sends uplink data to a MAC #1 in the MCG. If the target event is the SCG connection failure event or the SCG deactivation event, a PDCP #2 sends uplink data to an RLC #2 in an SCG, or an RLC #2 sends uplink data to a MAC #2 in the SCG.

It may be understood that, in the method shown in FIG. 11, when receiving the third indication information sent by the access network device, the terminal device may determine that the target event is resumed, and control the target entity in the first cell group corresponding to the target event to perform data transmission based on the first cell group. In other words, after receiving the third indication information, the terminal device may determine that the target event is resumed, to control the target entity to perform data transmission by using the transmission resource of the first cell group corresponding to the target event. This can avoid data loss.

In a possible example, the target entity is the target PDCP entity, and the method further includes: The terminal device controls the target PDCP entity to send data to a second RLC entity in a second cell group, where access network devices corresponding to the second cell group and the first cell group are different. It may be understood that the first RLC entity and the second RLC entity simultaneously transmit data for the target PDCP entity, so that data transmission efficiency can be improved.

In a possible example, the target entity is the target PDCP entity, and the first RLC entity includes an RLC entity associated with a duplicate bearer of the target PDCP entity in the first cell group by the access network device. In response to the first RLC entity being in an active state, the terminal device controls the target PDCP entity to send data to the first RLC entity.

As described above, when the first RLC entity is the RLC entity associated with a duplicate bearer of the target PDCP entity in the first cell group by the access network device (for example, the MN or the SN), and the first RLC entity is in the active state, the terminal device may control the target PDCP entity to send the data to the first RLC entity. When the first RLC entity is in an inactive state, the terminal device first configures the first RLC entity to be in the active state, and then controls the target PDCP entity to send the data to the first RLC entity.

Optionally, the second RLC entity includes an RLC entity associated with a duplicate bearer of the target PDCP entity in the second cell group by the access network device. In response to the second RLC entity being in the active state, the terminal device controls the target PDCP entity to send data to the second RLC entity. In other words, when the second RLC entity is the RLC entity associated with a duplicate bearer of the target PDCP entity in the second cell group by the access network device (for example, the MN or the SN), and the second RLC entity is also in the active state, the terminal device may transmit uplink data by using the first RLC entity and the second RLC entity. This improves data transmission efficiency.

The target entity is the target PDCP entity, and the first RLC entity includes an RLC entity associated with a split bearer of the target PDCP entity in the first cell group by the access network device. As described above, when a volume of to-be-sent data of the terminal device is greater than or equal to an uplink data threshold, the terminal device may determine to deliver PDCP data to an RLC entity associated with the MCG or an RLC entity associated with the SCG. It may be understood as that the terminal device directly controls, without considering the uplink data threshold, the target PDCP entity to send the data to the first RLC entity. When the volume of to-be-sent data of the terminal device is less than the uplink data threshold, the terminal device can only deliver the PDCP data to a primary RLC entity. In other words, when the uplink data threshold is considered, the terminal device sends data to the primary RLC entity. Based on this, in a possible example, in response to the first RLC entity being the primary RLC entity, the terminal device controls the target PDCP entity to send the data to the first RLC entity.

It may be understood that when the first RLC entity is the primary RLC entity, the terminal device may directly control the target PDCP entity to send the data to the first RLC entity. If the first RLC entity is not the primary RLC entity, or the second RLC entity is the primary RLC entity, the terminal device first modifies the first RLC entity to the primary RLC entity, and then controls the target PDCP entity to send the data to the first RLC entity.

When the target entity is the target PDCP entity, in a possible example, after step S1102, the method further includes: The terminal device reestablishes the first RLC entity.

Reestablishing the first RLC entity may include the following steps: discarding RLC data such as all RLC SDUs, RLC SDU segments, and RLC PDUs; stopping and resetting all timers (including a reassembly timer (t-Reassembly) at an RLC layer, configured to wait for at least one segment of an unreceived complete RLC SDU or a complete RLC SDU) at the RLC layer; and initializing a parameter of the first RLC entity.

It may be understood that, after the target event is resumed, the terminal device reestablishes the first RLC entity. This can ensure that an RLC status of the terminal device is consistent with that of a serving cell of a new SCG, and increase a probability of successful data transmission.

Further, in a possible example, after step S1102, the method further includes: The terminal device discards data stored in the first RLC entity. It may be understood that, after reestablishing the first RLC entity, the terminal device discards the data stored in the first RLC entity, and may reprocess data received by the first RLC entity. This can avoid repeated transmission.

In another possible example, after step S1102, the method further includes: The terminal device reestablishes the target PDCP entity.

Reestablishing the target PDCP entity may be implemented by discarding all stored data (including a PDCP SDU and a PDCP PDU). For DRB data in a UM mode, after PDCP SDUs that have been allocated with SNs but have not been transmitted to a lower layer are transmitted in ascending order of the SNs, a step of reestablishing the PDCP entity is performed. For DRB data in an AM mode, starting from a 1^{st} PDCP SDU for which an ARQ feedback has not been received, retransmission is performed and all PDCP SDUs that have been stored are sent in ascending order of SNs. After the sending is completed, the step of reestablishing the PDCP entity is performed.

It may be understood that after the target event is resumed, the terminal device reestablishes the target PDCP entity, to enable the target PDCP entity to reconnect to the first RLC entity in the first cell group. This can ensure that the RLC status of the terminal device is consistent with that of the serving cell of a new SCG, and increase the probability of successful data transmission.

Further, in a possible example, after step S1102, the method further includes: The terminal device retransmits unsent data of the target PDCP entity.

The unsent data is data that is not sent by the target PDCP entity. It may be understood as that when the target entity is suspended in step S702, the unsent data is data that is not sent by using the first RLC entity. In step S702, the target PDCP entity does not transmit data by using the first RLC entity, but transmits data by using the second RLC entity. The unsent data is the data that is not sent by using the first RLC entity and data that is not sent by using the second RLC entity. It may be understood that after reestablishing the target PDCP entity, the terminal device retransmits the unsent data of the target PDCP entity. This can avoid data loss.

In a possible example, before step S1103, the method further includes: The terminal device sends fourth indication information to the target entity.

The fourth indication information indicates that the target event is resumed, indicates the target entity to perform an operation of data transmission based on the first cell group, or the like. For details, refer to the foregoing description. This is not limited herein. It may be understood that, after receiving the fourth indication information, the target entity may be directly controlled by the terminal device based on the fourth indication information. This improves processing efficiency of the target entity. If the target entity can perform data transmission based on the first cell group and the second cell group, data transmission efficiency may be further improved.

In a possible example, after step S1102, the method further includes: The terminal device resumes a transmission link of the first cell group.

It may be understood that, when it is determined that the target event is resumed, on the basis of controlling the target entity to perform data transmission based on the first cell group, the transmission link of the first cell group may be resumed, to avoid a data transmission failure caused when the target entity sends the uplink data to the first cell group.

In a possible example, after step S1102, the method further includes: The terminal device resumes, activates, or reactivates a preconfigured authorization resource configured on the first cell group. The preconfigured authorization resource is a semi-persistent transmission resource configured by the access network device. The preconfigured authorization resource may take effect after the access network device configures a semi-persistent resource, or may take effect after the semi-persistent resource is activated by using a PDCCH. After resuming, activating, or reactivating the preconfigured authorization resource, the terminal device may perform data transmission with the access network device by using a previously suspended or deactivated preconfigured authorization resource.

Optionally, the target event is the SCG deactivation event. After step S1102, the method further includes: The terminal device continues to monitor or resumes monitoring a PDCCH on the SCG. It may be understood that, after the SCG deactivation event is resumed, channel quality of the SCG needs to be re-attended to, so that the terminal device may continue to monitor or resume monitoring the PDCCH on the SCG, to reduce power consumption.

Optionally, the target event is the SCG deactivation event. After step S1102, the method further includes: The terminal device resets a MAC entity of the SCG.

That the terminal device resets a MAC entity of the SCG includes but is not limited to stopping all running timers at the MAC layer, stopping an ongoing random access process, clearing a buffer corresponding to a HARQ, and the like, so that the terminal device may be consistent with the access network device.

Optionally, the target event is the SCG deactivation event. After step S1102, the method further includes: The terminal device activates or reactivates one or more cells on the SCG.

That the terminal device deactivates one or more cells on the SCG may be deactivating all secondary cells on the SCG, or deactivating all cells on the SCG, including a primary cell and a secondary cell. After activating or reactivating the one or more cells, the terminal device may receive or transmit data in the cell, so that the terminal device may monitor a PDCCH on the cell, and resume data transmission with the access network device.

FIG. 12 is a schematic flowchart of a fourth data transmission processing method according to an embodiment of this application. As shown in FIG. 12, the method includes the following steps S1201 to S1203.

S1201. An access network device sends third indication information to a terminal device.

S1202. The terminal device determines, based on the third indication information, that the target event is resumed.

For step S1201 and step S1202, refer to descriptions of step S1101 and step S1102, and details are not described herein again.

S1203. The terminal device resumes a target entity.

It may be understood that after the target event is resumed, the terminal device resumes a target PDCP entity, to enable the target PDCP entity to reconnect to a first RLC entity in a first cell group. This can ensure that an RLC status of the terminal device is consistent with that of a serving cell of a new SCG, and increase a probability of successful data transmission. In addition, after the target PDCP entity is resumed, the target PDCP entity may send data to a first RLC entity. For details, refer to the description of step S1103. Details are not described herein again.

After the target event is resumed, the terminal device resumes the first RLC entity. This can ensure that the RLC status of the terminal device is consistent with that of the serving cell of the new SCG, and increase the probability of successful data transmission. In addition, after the first RLC entity is resumed, the first RLC entity may send data to a MAC entity in the first cell group. For details, refer to the description of step S1103. Details are not described herein again.

When the target entity is the target PDCP entity, in a possible example, after step S 1202, the method further includes: The terminal device reestablishes the first RLC entity. It may be understood that, after the target event is resumed, the terminal device reestablishes the first RLC entity. This can ensure that the RLC status of the terminal device is consistent with that of the serving cell of the new SCG, and increase the probability of successful data transmission.

Further, in a possible example, after step S1202, the method further includes: The terminal device discards data stored in the first RLC entity. It may be understood that, after reestablishing the first RLC entity, the terminal device discards the data stored in the first RLC entity, and may reprocess data received by the first RLC entity. This can avoid repeated transmission.

In another possible example, after step S1202, the method further includes: The terminal device reestablishes the target PDCP entity. It may be understood that after the target event is resumed, the terminal device reestablishes the target PDCP entity, to enable the target PDCP entity to reconnect to the first RLC entity in the first cell group. This can ensure that the RLC status of the terminal device is consistent with that of the serving cell of the new SCG, and increase the probability of successful data transmission.

Further, in a possible example, after step S1202, the method further includes: The terminal device retransmits unsent data of the target PDCP entity. It may be understood that after reestablishing the target PDCP entity, the terminal device retransmits the unsent data of the target PDCP entity. This can avoid data loss.

When the target entity is the first RLC entity, in a possible example, after step S1202, the method further includes: The terminal device reprocesses an RLC SDU stored in the first RLC entity. It may be understood that, after reestablishing the first RLC entity, the terminal device reprocesses data, that is, the RLC SDU, stored in the first RLC entity. This can avoid data loss.

In a possible example, before step S1203, the method further includes: The terminal device sends fourth indication information to the target entity. It may be understood that, after receiving the fourth indication information, the target entity may be directly controlled by the terminal device based on the fourth indication information. This improves processing efficiency of the target entity.

In a possible example, after step S1202, the method further includes: The terminal device resumes a transmission link of the first cell group. It may be understood that, when it is determined that the target event is resumed, based on suspending the target entity, the transmission link of the first cell group may be resumed, to further avoid a data transmission failure caused when the target entity sends uplink data to the first cell group.

In a possible example, after step S1202, the method further includes: The terminal device resumes, activates, or reactivates a preconfigured authorization resource configured on the first cell group. The preconfigured authorization resource is a semi-persistent transmission resource configured by the access network device. The preconfigured authorization resource may take effect after the access network device configures a semi-persistent resource, or may take effect after the semi-persistent resource is activated by using a PDCCH. After resuming, activating, or reactivating the preconfigured authorization resource, the terminal device may perform data transmission with the access network device by using a previously suspended or deactivated preconfigured authorization resource.

Optionally, the target event is an SCG deactivation event. After step S1202, the method further includes: The terminal device continues to monitor or resumes monitoring a PDCCH on an SCG. It may be understood that, after the SCG deactivation event is resumed, channel quality of the SCG needs to be re-attended to, so that the terminal device may continue to monitor or resume monitoring the PDCCH on the SCG, to reduce power consumption.

Optionally, the target event is the SCG deactivation event. After step S1202, the method further includes: The terminal device resets a MAC entity of the SCG.

That the terminal device resets a MAC entity of the SCG includes but is not limited to stopping all running timers at a MAC layer, stopping an ongoing random access process, clearing a buffer corresponding to a HARQ, and the like, so that the terminal device may be consistent with the access network device.

Optionally, the target event is the SCG deactivation event. After step S1202, the method further includes: The terminal device activates or reactivates one or more cells on the SCG.

That the terminal device deactivates one or more cells on the SCG may be deactivating all secondary cells on the SCG, or deactivating all cells on the SCG, including a primary cell and a secondary cell. After activating or reactivating the one or more cells, the terminal device may receive or transmit data in the cell, so that the terminal device may monitor a PDCCH on the cell, and resume data transmission with the access network device.

The foregoing describes in detail the method in embodiments of this application, and the following provides an apparatus in embodiments of this application.

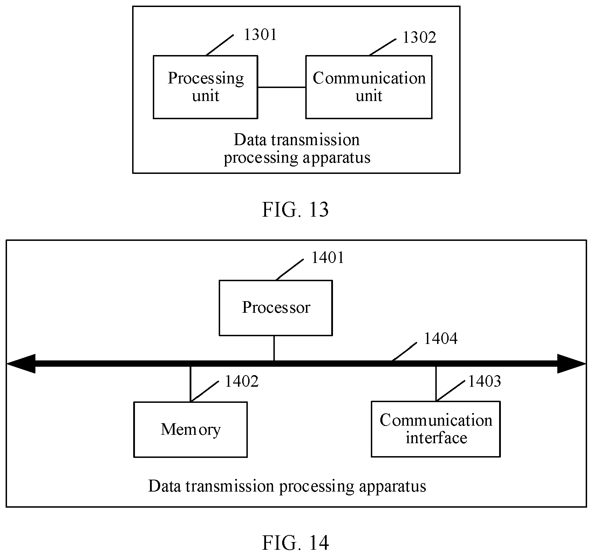

FIG. 13 is a schematic diagram of a structure of a data transmission processing apparatus according to an embodiment of this application. As shown in FIG. 13, the data transmission processing apparatus includes a processing unit 1301 and a communication unit 1302. Detailed descriptions of the units are as follows.

In one embodiment:
The processing unit 1301 is configured to determine that a target event occurs, where the target event includes at least one of the following: a connection failure event of a master cell group, a connection failure event of a secondary cell group, or a deactivation event of the secondary cell group; and control a target entity not to perform data transmission based on a first cell group corresponding to the target event, or suspend a target entity. The target entity is a target packet data convergence protocol PDCP entity or a first radio link control RLC entity in the first cell group.

Optionally, the target entity is the target PDCP entity. The processing unit 1301 is further configured to control the target PDCP entity to send data to a second RLC entity in a second cell group. Access network devices corresponding to the second cell group and the first cell group are different.

Optionally, the second RLC entity includes an RLC entity associated with a target PDCP entity of a duplicate bearer in the second cell group by the access network device. The processing unit 1301 is specifically configured to: in response to the second RLC entity being in an active state, control the target PDCP entity to send the data to the second RLC entity.

Optionally, the second RLC entity includes an RLC entity associated with a target PDCP entity of a split bearer in the second cell group by the access network device. The processing unit 1301 is specifically configured to: in response to the second RLC entity being a primary RLC entity, control the target PDCP entity to send the data to the second RLC entity.

Optionally, the target entity is the first RLC entity. The processing unit 1301 is further configured to discard an RLC SDU in the first RLC entity that has been partially sent.

Optionally, the processing unit 1301 is further configured to suspend the target PDCP entity.

Optionally, the communication unit 1302 is configured to send first indication information to the target entity. The first indication information indicates that the target event occurs, or indicates the target entity not to perform an operation of data transmission based on the first cell group.

Optionally, the processing unit 1301 is further configured to suspend a transmission link of the first cell group.

Optionally, the communication unit 1302 is further configured to send second indication information to the access network device. The second indication information indicates that the target event occurs, a type of the target event, or a measurement result of the terminal device.

In another embodiment:
A communication unit 1302 is configured to receive third indication information from an access network device.

A processing unit 1301 is configured to determine, based on third indication information, that a target event is resumed, where the target event includes at least one of the following: a connection failure event of a master cell group, a connection failure event of a secondary cell group, or a deactivation event of the secondary cell group; and control a target entity to perform data transmission based on a first cell group corresponding to the target event, or resume a target entity. The target entity is a target PDCP entity or a first RLC entity in the first cell group.

Optionally, the target entity is the target PDCP entity, and the processing unit 1301 is further configured to reestablish the first RLC entity.

Optionally, the processing unit 1301 is further configured to discard data stored in the first RLC entity.

Optionally, the target entity is the target PDCP entity, and the processing unit 1301 is further configured to reestablish the target PDCP entity.

Optionally, the processing unit 1301 is further configured to retransmit unsent data of the target PDCP entity.

Optionally, the processing unit 1301 is further configured to control the target PDCP entity to send data to a second RLC entity in a second cell group. Access network devices corresponding to the second cell group and the first cell group are different.

Optionally, the first RLC entity includes an RLC entity associated with a target PDCP entity of a duplicate bearer in the first cell group by the access network device. The processing unit 1301 is specifically configured to: in response to the first RLC entity being in an active state, control the target PDCP entity to send the data to the first RLC entity.

Optionally, the first RLC entity includes an RLC entity associated with a target PDCP entity of a split bearer in the first cell group by the access network device. The processing unit 1301 is specifically configured to: in response to the first RLC entity being a primary RLC entity, control the target PDCP entity to send the data to the first RLC entity.

Optionally, the target entity is the first RLC entity, and the processing unit 1301 is further configured to reprocess an RLC SDU stored in the first RLC entity.

Optionally, the communication unit 1302 is further configured to send fourth indication information to the target entity. The fourth indication information indicates that the target event is resumed, or indicates the target entity to perform an operation of data transmission based on the first cell group.

Optionally, the processing unit 1301 is further configured to resume a transmission link of the first cell group.

FIG. 14 is a schematic diagram of a structure of another data transmission processing apparatus according to an embodiment of this application. The data transmission processing apparatus includes a processor 1401, a memory 1402, and a communication interface 1403. The processor 1401, the memory 1402, and the communication interface 1403 are connected by using a bus 1404.

The memory 1402 includes, but is not limited to, a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1402 is used for a related computer program and sidelink data. The communication interface 1403 is configured to receive and send the sidelink data.

The processor 1401 may be one or more central processing units (central processing units, CPUs). When the processor 1401 is one CPU, the CPU may be a single-core CPU, or may be a multi-core CPU.

In an embodiment, the processor 1401 is configured to read computer program code stored in the memory 1402, and perform the following operations:
determining that a target event occurs, where the target event includes at least one of the following: a connection failure event of a master cell group, a connection failure event of a secondary cell group, or a deactivation event of the secondary cell group; and
controlling a target entity not to perform data transmission based on a first cell group corresponding to the target event, or suspending a target entity, where the target entity is a target packet data convergence protocol PDCP entity or a first radio link control RLC entity in the first cell group.

Optionally, the target entity is the target PDCP entity, and the processor 1401 is further configured to perform the following operation:
controlling the target PDCP entity to send data to a second RLC entity in a second cell group, where access network devices corresponding to the second cell group and the first cell group are different.

Optionally, the second RLC entity includes an RLC entity associated with a target PDCP entity of a duplicate bearer in the second cell group by the access network device, and the processor 1401 is specifically configured to perform the following operation:
in response to the second RLC entity being in an active state, controlling the target PDCP entity to send the data to the second RLC entity.

Optionally, the second RLC entity includes an RLC entity associated with a target PDCP entity of a split bearer in the second cell group by the access network device, and the processor 1401 is specifically configured to perform the following operation:
in response to the second RLC entity being a primary RLC entity, controlling the target PDCP entity to send the data to the second RLC entity.

Optionally, the target entity is the first RLC entity, and the processor 1401 is further configured to perform the following operation:
discarding an RLC SDU in the first RLC entity that has been partially sent.

Optionally, the processor 1401 is further configured to perform the following operation:
suspending the target PDCP entity.

Optionally, the processor 1401 is further configured to perform the following operation:
sending first indication information to the target entity, where the first indication information indicates that the target event occurs, or indicates the target entity not to perform an operation of data transmission based on the first cell group.

Optionally, the processor 1401 is further configured to perform the following operation:
suspending a transmission link of the first cell group.

Optionally, the processor 1401 is further configured to perform the following operation:
sending second indication information to the access network device, where the second indication information indicates that the target event occurs, a type of the target event, or a measurement result of the terminal device.

In another embodiment, a processor 1401 is configured to read computer program code stored in a memory 1402, and perform the following operations:
receiving third indication information from the access network device; and
determining, based on the third indication information, that the target event is resumed, where the target event includes at least one of the following: a connection failure event of a master cell group, a connection failure event of a secondary cell group, or a deactivation event of the secondary cell group; and controlling the target entity to perform data transmission based on the first cell group corresponding to the target event, or resuming the target entity. The target entity is a target PDCP entity or a first RLC entity in the first cell group.

Optionally, the target entity is the target PDCP entity, and the processor 1401 is further configured to perform the following operation:
reestablishing the first RLC entity.

Optionally, the processor 1401 is further configured to perform the following operation:
discarding data stored in the first RLC entity.

Optionally, the target entity is the target PDCP entity, and the processor 1401 is further configured to perform the following operation:
reestablishing the target PDCP entity.

Optionally, the processor 1401 is further configured to perform the following operation:
retransmitting unsent data of the target PDCP entity.

Optionally, the processor 1401 is further configured to perform the following operation:
controlling the target PDCP entity to send the data to the second RLC entity in the second cell group, where access network devices corresponding to the second cell group and the first cell group are different.

Optionally, the first RLC entity includes an RLC entity associated with a target PDCP entity of a duplicate bearer in the first cell group by the access network device, and the processor 1401 is specifically configured to perform the following operation:
in response to the first RLC entity being in the active state, controlling the target PDCP entity to send data to the first RLC entity.

Optionally, the first RLC entity includes an RLC entity associated with a target PDCP entity of a split bearer in the first cell group by the access network device, and the processor 1401 is specifically configured to perform the following operation:
in response to the first RLC entity being the primary RLC entity, controlling the target PDCP entity to send the data to the first RLC entity.

Optionally, the target entity is the first RLC entity, and the processor 1401 is further configured to perform the following operation:
reprocessing an RLC SDU stored in the first RLC entity.

Optionally, the processor 1401 is further configured to perform the following operation:
sending fourth indication information to the target entity, where the fourth indication information indicates the target event is resumed, or indicates the target entity to perform the operation of data transmission based on the first cell group.

Optionally, the processor 1401 is further configured to perform the following operation:
resuming the transmission link of the first cell group.

This application provides a chip, including a processor, configured to invoke instructions from a memory and run the instructions stored in the memory, so that a terminal device in which the chip is installed performs the methods shown in FIG. 7, FIG. 10, FIG. 11, and FIG. 12.

This application further provides another chip. The chip may be a chip in a terminal device or an access network device. The chip includes an input interface, an output interface, and a processing circuit. The input interface, the output interface, and the circuit are connected through an internal connection path. The processing circuit is configured to perform the methods shown in FIG. 7, FIG. 10, FIG. 11, and FIG. 12.

This application further provides another chip, including an input interface, an output interface, and a processor. Optionally, the chip further includes a memory. The input interface, the output interface, the processor, and the memory are connected through an internal connection path. The processor is configured to execute code in the memory. When the code is executed, the processor is configured to perform the methods shown in FIG. 7, FIG. 10, FIG. 11, and FIG. 12.

An embodiment of this application further provides a chip system. The chip system includes at least one processor, a memory, and an interface circuit. The memory, a transceiver, and the at least one processor are interconnected through a line. The at least one memory stores a computer program. When the computer program is executed by the processor, the method procedures shown in FIG. 7, FIG. 10, FIG. 11, and FIG. 12 are implemented.

An embodiment of this application further provides a computer-readable storage medium. The computer-readable storage medium stores a computer program. When the computer program is run on a communication apparatus, the method procedures shown in FIG. 7, FIG. 10, FIG. 11, and FIG. 12 are implemented.

An embodiment of this application further provides a computer program product. When the computer program product is run on a communication apparatus, the method procedures shown in FIG. 7, FIG. 10, FIG. 11, and FIG. 12 are implemented.

An embodiment of this application further provides a communication system. The system includes the terminal device and the access network device in any one of the foregoing embodiments.

In conclusion, according to embodiments of this application, after determining that the target event occurs, the terminal device controls the target entity in the first cell group not to perform data transmission by using the transmission resource of the first cell group corresponding to the target event, or implements, by suspending the target entity, that the target entity does not perform data transmission by using the transmission resource of the first cell group corresponding to the target event. This avoids using the first cell group to communicate with the access network device corresponding to the first cell group, and avoids the data transmission failure. In addition, after determining that the target event is resumed, the terminal device may directly control the target entity to perform data transmission by using the transmission resource of the first cell group corresponding to the target event, or implement, by resuming the target entity, that the target entity performs data transmission by using the transmission resource of the first cell group corresponding to the target event. This can avoid data loss.

A person of ordinary skill in the art may understand that all or some of the processes of the methods in the foregoing embodiments may be implemented by a computer program instructing related hardware. The computer program may be stored in a computer-readable storage medium. When the computer program is run, the processes in the foregoing method embodiments may be performed. The foregoing storage medium includes any medium that can store computer program code, such as a ROM or a random access memory RAM, a magnetic disk, or an optical disc.

## Claims

1. A data transmission processing method, comprising:
determining, by a terminal device, that a target event occurs, wherein the target event comprises at least one of the following: a connection failure event of a master cell group, a connection failure event of a secondary cell group, or a deactivation event of the secondary cell group; and
controlling, by the terminal device, a target entity not to perform data transmission based on a first cell group corresponding to the target event, or suspending the target entity, wherein the target entity is a target packet data convergence protocol PDCP entity or a first radio link control RLC entity in the first cell group.

2. The data transmission processing method according to claim 1, wherein the target entity is the target PDCP entity, and the method further comprises:
controlling, by the terminal device, the target PDCP entity to send data to a second RLC entity in a second cell group, wherein access network devices corresponding to the second cell group and the first cell group are different.

3. The data transmission processing method according to claim 2, wherein the second RLC entity comprises an RLC entity associated with a duplicate bearer of the target PDCP entity in the second cell group by the access network device, and the controlling, by the terminal device, the target PDCP entity to send data to a second RLC entity in a second cell group comprises:
in response to the second RLC entity being in an active state, controlling, by the terminal device, the target PDCP entity to send the data to the second RLC entity.

4. The data transmission processing method according to claim 2, wherein the second RLC entity comprises an RLC entity associated with a split bearer of the target PDCP entity in the second cell group by the access network device, and the controlling, by the terminal device, the target PDCP entity to send data to a second RLC entity in a second cell group comprises:
in response to the second RLC entity being a primary RLC entity, controlling, by the terminal device, the target PDCP entity to send the data to the second RLC entity.

5. The data transmission processing method according to claim 1, wherein the target entity is the first RLC entity, and the method further comprises:
discarding, by the terminal device, an RLC SDU in the first RLC entity that has been partially sent.

6. The data transmission processing method according to claim 1, wherein the method further comprises:
suspending, by the terminal device, the target PDCP entity.

7. The data transmission processing method according to any one of claims 1 to 6, wherein before the controlling, by the terminal device, a target entity not to perform data transmission based on a first cell group, the method further comprises:
sending, by the terminal device, first indication information to the target entity, wherein the first indication information indicates that the target event occurs, or indicates the target entity not to perform an operation of data transmission based on the first cell group.

8. The data transmission processing method according to any one of claims 1 to 7, wherein the method further comprises:
suspending, by the terminal device, a transmission link of the first cell group.

9. The data transmission processing method according to any one of claims 1 to 8, wherein the method further comprises:
sending, by the terminal device, second indication information to the access network device, wherein the second indication information indicates that the target event occurs, a type of the target event, or a measurement result of the terminal device.

10. A data transmission processing method, comprising:
receiving, by a terminal device, third indication information from an access network device;
determining, by the terminal device based on the third indication information, that a target event is resumed, wherein the target event comprises at least one of the following: a connection failure event of a master cell group, a connection failure event of a secondary cell group, or a deactivation event of the secondary cell group; and
controlling, by the terminal device, a target entity to perform data transmission based on a first cell group corresponding to the target event, or resuming the target entity, wherein the target entity is a target PDCP entity or a first RLC entity in the first cell group.

11. The data transmission processing method according to claim 10, wherein the target entity is the target PDCP entity, and the method further comprises:
reestablishing, by the terminal device, the first RLC entity.

12. The data transmission processing method according to claim 11, wherein the method further comprises:
discarding, by the terminal device, data stored in the first RLC entity.

13. The data transmission processing method according to claim 10, wherein the target entity is the target PDCP entity, and the method further comprises:
reestablishing, by the terminal device, the target PDCP entity.

14. The data transmission processing method according to claim 13, wherein the method further comprises:
retransmitting, by the terminal device, unsent data of the target PDCP entity.

15. The data transmission processing method according to any one of claims 11 to 14, wherein the method further comprises:
controlling, by the terminal device, the target PDCP entity to send data to a second RLC entity in a second cell group, wherein access network devices corresponding to the second cell group and the first cell group are different.

16. The data transmission processing method according to any one of claims 11 to 15, wherein the first RLC entity comprises an RLC entity associated with a duplicate bearer of the target PDCP entity in the first cell group by the access network device, and the controlling, by the terminal device, a target entity to perform data transmission based on a first cell group comprises:
in response to the first RLC entity being in an active state, controlling, by the terminal device, the target PDCP entity to send the data to the first RLC entity.

17. The data transmission processing method according to any one of claims 11 to 15, wherein the first RLC entity comprises an RLC entity associated with a split bearer of the target PDCP entity in the first cell group by the access network device, and the controlling, by the terminal device, a target entity to perform data transmission based on a first cell group comprises:
in response to the first RLC entity being a primary RLC entity, controlling, by the terminal device, the target PDCP entity to send the data to the first RLC entity.

18. The data transmission processing method according to claim 10, wherein the target entity is the first RLC entity, and the method further comprises:
reprocessing, by the terminal device, an RLC SDU stored in the first RLC entity.

19. The data transmission processing method according to any one of claims 10 to 18, wherein before the controlling, by the terminal device, a target entity to perform data transmission based on a first cell group corresponding to the target event, the method further comprises:
sending, by the terminal device, fourth indication information to the target entity, wherein the fourth indication information indicates that the target event is resumed, or indicates the target entity to perform an operation of data transmission based on the first cell group.

20. The data transmission processing method according to any one of claims 10 to 19, wherein the method further comprises: resuming, by the terminal device, a transmission link of the first cell group.

21. A data transmission processing apparatus, comprising a processing unit and/or a communication unit corresponding to the method according to any one of claims 1 to 20.

22. A communication apparatus, comprising a processor, wherein the processor is coupled to a memory, the memory is configured to store one or more programs, and the one or more programs are executed by the processor to perform the method according to any one of claims 1 to 20.

23. A computer-readable storage medium, configured to store a computer program, wherein the computer program enables a computer to perform the method according to any one of claims 1 to 20.
